# EUROPÄISCHE PATENTSCHRIFT

(11) **EP 0 715 778 B1**
(45) Veröffentlichungstag und Bekanntmachung des Hinweises auf die Patenterteilung: **12.04.2000**
(21) Anmeldenummer: 95925774.2
(22) Anmeldetag: 28.06.1995
(51) Int. Cl.: H02K 3/28, H02K 17/16, H02K 29/00, H02K 11/04, H02P 7/62

(54) **ASYNCHRONMASCHINE**
ASYNCHRONOUS MACHINE
MOTEUR ASYNCHRONE

(30) Priorität: 28.06.1994 DE 4422622
(43) Veröffentlichungstag der Anmeldung: 12.06.1996
(73) Patentinhaber: Firma Eugenie Mühmel, 89073 Ulm (DE)
(72) Erfinder: BAUKNECHT, Günter, D-89073 Ulm (DE)
(74) Vertreter: Riebling, Peter, Dr.-Ing.
(86) Internationale Anmeldenummer: EP9502506
(87) Internationale Veröffentlichungsnummer: WO9601000

(56) Entgegenhaltungen:
- DE-A- 2 748 515

## Beschreibung

Die Erfindung betrifft eine elektrische Asynchronmaschine umfassend einen Rotor, einen Stator, eine dem Stator oder dem Rotor zugeordnete Wicklung mit mindestens zwei Strängen, mit welcher ein umlaufendes Polfeld erzeugbar ist, wobei die Wicklung mindestens eine geradzahlige Anzahl N von vier oder mehr Teilwicklungen umfaßt, daß die Teilwicklungen in Form einer Polygonschaltung so zusammengeschaltet sind, daß die Zahl der Ecken der Polygonschaltung der Zahl der Teilwicklungen entspricht und jede Ecke einen Verknüpfungspunkt von in der Polygonschaltung aufeinanderfolgenden Teilwicklungen darstellt, so daß jeweils zwischen zwei aufeinanderfolgenden Verknüpfungspunkten je eine Teilwicklung liegt und wobei, jeder Verknüpfungspunkt einen Speiseanschluß aufweist, wobei die Speiseanschlüsse einander gegenüberliegender Verknüpfungspunkte der Polygonschaltung ein Anschlußpaar bilden, zwischen welchem jeweils zwei parallel geschaltete Sätze mit jeweils derselben Zahl hintereinandergeschalteter Teilwicklungen liegen, und mindestens eine Strom- oder Spannungsquelle zur Speisung der Wicklung.

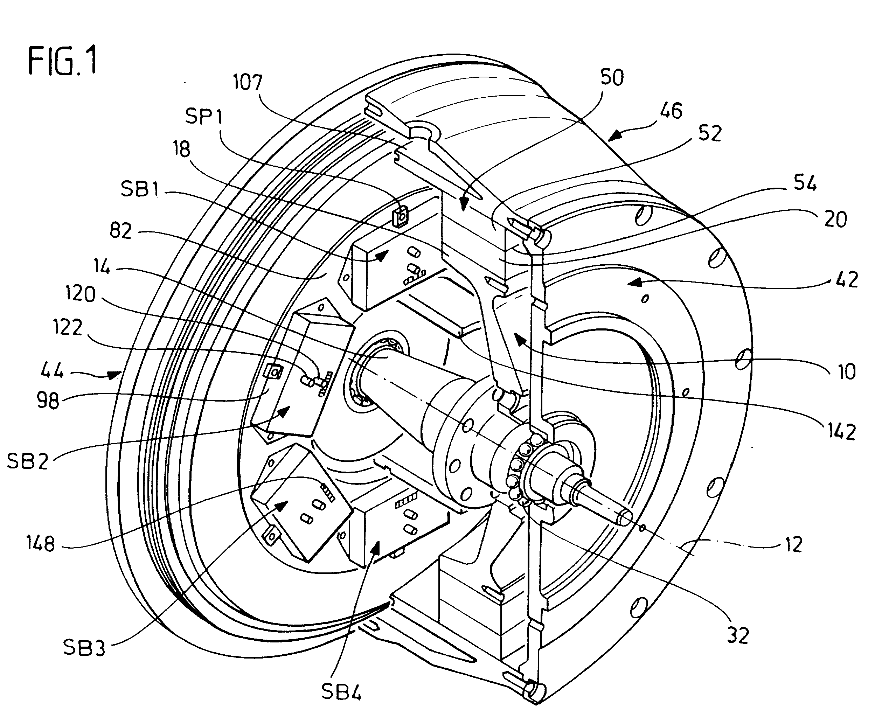

Aus der DE-A-27 48 515 ist eine elektrische Asynchronmaschine bekannt, bei welcher die Wicklungen zwar gleichzeitig kommutiert werden, es wird jedoch aber in einer Phase einer der Positiv-Festkörperschalter 3aP bis 3fP und einer der Negativ-Festkörperschalter 3aN bis 3fN ein- und ausgeschaltet, beispielsweise werden die Schalter 3aP und 3dN gleichzeitig ein- und ausgeschaltet, was nichts anderes heißt, als daß jeweils einer der möglichen Stromkreise aktiviert wird, wobei jeweils eine Einspeisung an gegenüberliegenden Punkten der Sechsphasenschaltung gemäß Fig. 1b erfolgt.

Dies führt zu Drehmomentwelligkeiten oder Schwankungen, die nachteiligerweise groß sind.

Der Erfindung liegt daher die Aufgabe zugrunde, eine Asynchronmaschine der eingangs beschriebenen Art hinsichtlich ihrer Leistungsmerkmale zu verbessern.

Diese Aufgabe wird bei einer elektrischen Asynchronmaschine der eingangs beschriebenen Art erfindungsgemäß dadurch gelöst, daß die Anschlußpaare der Polygonschaltung in getrennten gleichzeitig und phasenversetzt betriebenen Stromkreisen liegen und jeder dieser Stromkreise einen sich periodisch ändernden und sich auf die beiden Sätze von Teilwicklungen verteilenden Strom durch die Wicklung fließen läßt.

Gegenüber der DE-A-27 48 515 besteht die Grundidee der vorliegenden Erfindung darin, nicht nur einen der Stromkreise zu betreiben, sondern alle Stromkreise zu gleicher Zeit, wobei die Stromkreise selbstverständlich phasenversetzt mit einem sich periodisch ändernden Storm betrieben werden.

Die erfindungsgemäße Lösung hat den großen Vorteil, daß mit dieser Aufteilung der Wicklung in vier oder mehr Teilwicklungen und die erfindungsgemäße Speisung der Teilwicklungen durch mindestens zwei oder mehr Stromkreise entweder die Möglichkeit geschaffen wird, die über jeden Stromkreis in die Wicklung einzuspeisenden Ströme zu reduzieren und damit die Stromkreise kleiner dimensionieren zu können, wobei dieselbe Leistung der Elektromaschine wie bei der Stern- oder Dreieckschaltung erreichbar ist, allerdings nicht - wie bei der Stern- und Dreieckschaltung - letztlich jeder Stromkreis auf den maximalen Strom in der Wicklung und die maximale Spannung ausgelegt werden muß, oder die Möglichkeit besteht, bei gleichem Strom in den Stromkreisen die Leistung der Asynchronmaschine zu steigern.

Ein weiterer Vorteil der erfindungsgemäßen Lösung ist darin zu sehen, daß diese die Möglichkeit bietet, die Frequenz des Stroms oder der Spannung in den einzelnen Stromkreisen bei gleicher spezifischer Leistung des Stromkreises zu erhöhen, da eine Erhöhung der Frequenz von Strom und Spannung einen höheren Blindstrom in den Stromkreisen nach sich zieht, der aber bei Aufteilung auf mehrere Stromkreise technisch nicht zu Problemen führt.

Die Konsequenz hieraus ist, daß entweder die Polzahl der elektrischen Asynchronmaschine erhöht werden kann, wenn man die gewünschte Drehzahl konstant läßt, oder bei gleicher Polzahl die Drehzahl gesteigert werden kann.

Die Steigerung der Frequenz von Strom und Spannung in den einzelnen Stromkreisen ist gegenüber dem konventionellen Drehstrommotor um einen Faktor möglich, welcher dem Quotient aus der Zahl der Ecken der Polygonschaltung dividiert durch drei entspricht.

Die beispielsweise damit mögliche Steigerung der Polzahl führt dazu, daß für ein gefordertes Drehmoment das Maschinengewicht reduziert werden kann.

Besonders vorteilhaft ist die erfindungsgemäße Lösung dann, wenn sich Polzahlen von mehr als acht als vorteilhaft erweisen, da diese ohne Probleme realisierbar sind, wohingegen bei konventionellen elektrischen Asynchronmaschinen in Stern- oder Dreieckschaltung bei Polzahlen von mehr als acht die Leistung der elektrischen Maschine abnimmt.

Es sind auch problemlos Polzahlen von mehr als 14, beispielsweise von 28 bei einer sechseckigen Polygonschaltung, realisierbar.

Um in der erfindungsgemäßen Asynchronmaschine ein möglichst symmetrisches Polfeld zu erzeugen hat es sich als besonders vorteilhaft erwiesen, wenn in jedem Stromkreis der Strom im wesentlichen gleichmäßig auf die beiden Sätze von Teilwicklungen der Wicklung verteilt ist.

Ferner ist es für die Kraftwirkungen zwischen Rotor und Stator vorteilhaft, wenn in der Polygonschaltung einander gegenüberliegende Teilwicklungen im wesentlichen dieselbe Reaktanz aufweisen und mit im wesentlichen denselben Kräften wirken, was sich am einfachsten dadurch realisieren läßt, daß in der Polygonschaltung einander gegenüberliegende Teilwicklungen im wesentlichen gleich ausgebildet sind.

Besonders einfach ist der Aufbau einer erfindungsgemäßen Asynchronmaschine dann, wenn alle Teilwicklungen der Wicklung im wesentlichen gleich ausgebildet sind, das heißt im wesentlichen dieselbe Reaktanz aufweisen und mit denselben Kräften wirken.

Hinsichtlich der Lage der einzelnen Teilwicklungen wurden im Zusammenhang mit der bisherigen Erläuterung einzelner vorteilhafter Ausführungsbeispiele keine näheren Angaben gemacht. So ist vorteilhafterweise vorgesehen, daß die Teilwicklungen so gewickelt sind, daß in der Polygonschaltung einander gegenüberliegende Teilwicklungen in nebeneinander liegenden Polnuten des Stators bzw. des Rotors liegen. Damit läßt sich ein besonders vorteilhafter Aufbau des Polfeldes realisieren.

Ferner ist es in Weiterbildung dieser Lösung besonders zweckmäßig, wenn die Teilwicklungen so in den Stator bzw. den Rotor eingewickelt sind, daß in einer Umlaufrichtung der Polygonschaltung betrachtet die auf eine ausgewählte Teilwicklung folgende Teilwicklung in den Polnuten neben den Polnuten der der ausgewählten Teilwicklung gegenüberliegenden Teilwicklung liegt.

Alternativ zu der vorstehend beschriebenen Anordnung der Teilwicklungen ist vorgesehen, daß die Teilwicklungen so in den Stator gewickelt sind, daß in der Polygonschaltung aufeinanderfolgende Teilwicklungen in nebeneinanderliegenden Polnuten liegen.

Insbesondere ist es bei einem derartigen Aufbau der Teilwicklungen möglich, diese so in den Stator bzw. den Rotor einzuwickeln, daß in der Polygonschaltung einander gegenüberliegende Teilwicklungen jeweils unterschiedliche Hälften des Stators bzw. des Rotors durchsetzen und sich zusammen zu einer den Stator bzw. den Rotor vollständig durchsetzenden Teilwicklung ergänzen.

Alternativ dazu ist es möglich, daß die Teilwicklungen so in den Stator bzw. Rotor eingewickelt sind, daß einander gegenüberliegende Teilwicklungen in gemeinsamen Polnuten liegen.

Hinsichtlich der Positionierung von Anfang und Ende der in der Polygonschaltung aufeinanderfolgenden Teilwicklungen wurden bei der bisherigen Erläuterung von Ausführungsbeispielen keine näheren Angaben gemacht. So könnte beispielsweise vorgesehen sein, Anfang und Ende aller in der Polygonschaltung aufeinanderfolgender Teilwicklungen in einem kleinen Statorbereich bzw. Rotorbereich, welcher einer oder zwei Polteilungen entspricht, zu positionieren. Dies wäre beispielsweise dann sinnvoll, wenn die Zuleitungen zu den Teilwicklungen aus der erfindungsgemäßen Asynchronmaschine herausgeführt werden sollen.

Besonders vorteilhaft, insbesondere für eine getrennte Speisung der Teilwicklungen und die getrennte Anordnung der einzelnen Stromkreise in der erfindungsgemäßen Asynchronmaschine ist es, wenn Anfang und Ende in der Polygonschaltung aufeinanderfolgender Teilwicklungen um ganzzahlige Zahlen von Polteilungen der Wicklung gegeneinander versetzt sind.

Eine gleichmäßige Verteilung von Anfang und Ende aufeinanderfolgender Teilwicklungen ist dann erreichbar, wenn Anfang und Ende in der Polygonschaltung aufeinanderfolgender Teilwicklungen um mindestens die ganzzahlige Zahl von Polteilungen der Wicklung versetzt sind, die der nächstkleineren ganzen Zahl des Quotienten aus der Polzahl und der Zahl der Stränge entspricht.

Ferner ist es zusätzlich als weiteres Kriterium noch vorteilhaft, wenn Anfang und Ende in der Polygonschaltung aufeinanderfolgender Teilwicklungen um höchstens die ganzzahlige Zahl von Polteilungen versetzt sind, die der nächstgrößeren ganzen Zahl des Quotienten aus Polzahl und Zahl der Stränge entspricht.

Hinsichtlich der Teilwicklungen wurden bislang keine detaillierten Aussagen gemacht. Insbesondere wurde nicht spezifiziert, inwiefern die Teilwicklung einem Strang der Wicklung entspricht oder lediglich Teil eines Strangs der Wicklung ist. Eine vorteilhafte Lösung sieht dabei vor, daß jede Teilwicklung der Wicklung einen Strang derselben bildet. Alternativ dazu ist es aber ebenfalls denkbar, daß zwei in der Polygonschaltung einander gegenüberliegende Teilwicklungen einen Strang bilden.

Die Stränge der Wicklung hängen mit dem Polfeld dahingehend zusammen, daß jeder Strang in jedem Pol zum Aufbau des Polfeldes in derselben Weise beiträgt, oder anders ausgedrückt jeder Strang in einer Polteilung mit derselben Zahl von Windungen vorkommt.

Hinsichtlich der Art der Ströme, die durch die Stromkreise fließen wurden ebenfalls bislang noch keine näheren Angaben gemacht. So ist vorteilhafterweise vorgesehen, daß die Ströme in allen Stromkreisen dieselbe Periodendauer aufweisen.

Ferner ist es vorteilhaft, wenn die Ströme in allen Stromkreisen dieselbe Halbwellenform aufweisen.

Ferner ist vorzugsweise vorgesehen, um die Wirkung der einzelnen Stromkreise möglichst gleich zu halten, daß die Ströme in allen Stromkreisen im wesentlichen dieselbe Maximalamplitude aufweisen.

Um eine Bewegung des Polfeldes relativ zur Wicklung zu erhalten, ist vorzugsweise vorgesehen, daß der sich periodisch ändernde Strom in einem ausgewählten Stromkreis gegenüber dem Strom in einem nächstliegenden Stromkreis phasenverschoben ist.

Die Phasenverschiebung kann in vielfältiger Weise ausgewählt werden. Besonders vorteilhaft ist es, wenn der sich periodisch ändernde Strom in einem ausgewählten Stromkreis gegenüber dem Strom in einem nächstliegenden Stromkreis um einen Phasenwinkel von 360° geteilt durch die Anzahl der Teilwicklungen phasenverschoben ist.

Der sich periodisch ändernde Strom in den einzelnen Stromkreisen könnte prinzipiell ein periodischer Rechteckstrom sein. Besonders vorteilhaft ist es jedoch, wenn die in allen Stromkreisen der Polygonschaltung fließenden Ströme einen derartigen Zeitverlauf aufweisen, daß zu jedem Zeitpunkt in mindestens einem der Stromkreise die zeitliche Ableitung des Stroms ungleich Null ist, das heißt, daß sich zu jedem Zeitpunkt der Strom in mindestens einem der Stromkreise ändert, was dazu führt, daß sich das Polfeld auch zu jedem Zeitpunkt um die Rotorachse herum bewegt.

Vorzugsweise ist hierzu vorgesehen, daß die Halbwellenform der Ströme in den Stromkreisen so gewählt ist, daß deren ansteigende und der abfallende Flankenbereich der Halbwelle zusammen über einen Phasenwinkel von mindestens 360° geteilt durch die Anzahl der Teilwicklungen verlaufen.

Vorzugsweise sind der ansteigende Flankenbereich und der abfallende Flankenbereich gleich ausgebildet und verlaufen jeweils mindestens über einen Phasenwinkel von mindestens 360° geteilt durch die 2-fache Anzahl der Teilwicklungen.

Hierbei wäre es auch denkbar, als Halbwellenform eine Sinushalbwelle zu verwenden.

Die magnetische Durchflutung jedes einzelnen Zahns kann jedoch dann gesteigert werden, wenn die Halbwellenform einen ansteigenden und einen abfallenden Flankenbereich und einen dazwischenliegenden verbreiterten Maximalbereich aufweist.

Hierbei wäre es beispielsweise auch denkbar, daß der Maximalbereich zwei durch den ansteigenden und den abfallenden Flankenbereich begrenzte Maxima und ein dazwischenliegendes kleines Minimum mit ungefähr minimal 80 % des Maximalwertes, noch besser ungefähr 90 % des Maximalwertes, aufweist.

Als besonders vorteilhaft hat es sich erwiesen, wenn die Halbwellenform trapezähnlich ausgebildet ist, so daß der Maximalbereich zwischen der im wesentlichen linear ansteigenden und im wesentlichen linear absteigenden Flanke im wesentlichen konstant verläuft.

Der Maximalbereich erstreckt sich vorzugsweise über einen Phasenwinkel von maximal 360° geteilt durch die halbe Anzahl der Teilwicklungen.

Im Hinblick auf die Leistungssteuerung in den einzelnen Stromkreisen wurden bislang keine näheren Angaben gemacht. So sieht ein vorteilhaftes Ausführungsbeispiel vor, daß in jedem Stromkreis ein strom- oder spannungsfestlegender Leistungssteller vorgesehen ist.

Besonders vorteilhaft für die erfindungsgemäße Asynchronmaschine hat es sich erwiesen, wenn durch den Leistungssteller in dem Stromkreis ein eingeprägter Strom vorgebbar ist und sich die Spannung entsprechend dem eingeprägten Strom frei einstellt, da in diesem Fall vermieden werden kann, daß beispielsweise bei blockierter Maschine gefährliche Überströme in den Wicklungen auftreten.

Vorzugsweise ist in jedem Stromkreis an jedem Speiseanschluß ein Leistungssteller vorgesehen, so daß die beiden in jedem Stromkreis liegenden Leistungssteller durch eine gemeinsame Stellersteuerung angesteuert sind.

Noch vorteilhafter ist es, wenn sämtliche Leistungssteller aller Stromkreise durch eine gemeinsame Stellersteuerung angesteuert sind.

Ein besonders zweckmäßiges Ausführungsbeispiel sieht vor, daß alle Leistungssteller parallel geschaltet von einem Gleichstromkreis als Zwischenkreis gespeist sind.

Bei der erfindungsgemäßen Asynchronmaschine ist die Wicklung vorzugsweise die Statorwicklung, da diese im ruhenden System liegt und daher am einfachsten gespeist werden kann.

Ferner ist der Rotor aus Gründen des einfacheren Aufbaus vorzugsweise mit einer Kurzschlußwicklung versehen, obwohl auch andere Wicklungen denkbar wären.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels eines erfindungsgemäßen Asynchronmotors mit teilweise weggebrochenem Rotor und weggebrochenem Zwischenkreis für die Leistungssteller;
- Fig. 2: einen halbseitigen Querschnitt durch das erste Ausführungsbeispiel des erfindungsgemäßen Asynchronmotors;
- Fig. 3: einen Schnitt längs Linie 3-3 in Fig. 2;
- Fig. 4: ein Schaltungsschema zur Speisung einer Statorwicklung des erfindungsgemäßen Asynchronmotors;
- Fig. 5: ein vereinfachtes Wicklungsschema für einen Strang der Statorwicklung;
- Fig. 6: die Verschaltung von Anfängen und Enden der einzelnen Stränge;
- Fig. 7: einen Schnitt längs Linie 7-7 in Fig. 2 mit teilweise weggebrochenem Steller;
- Fig. 8: eine schematische Darstellung von Strömen eines ersten Stromkreises durch eine erfindungsgemäße Statorwicklung;
- Fig. 9: eine schematische Darstellung der Ströme ähnlich Fig. 8 für einen zweiten Stromkreis;
- Fig. 10: eine schematische Darstellung der Ströme ähnlich Fig. 8 für einen dritten Stromkreis;
- Fig. 11: eine ausschnittsweise abgewickelte Darstellung von einzelnen Zähnen des Stators mit dem aufgebauten Polfeld;
- Fig. 12: eine schematische Darstellung einzelner Zähne des Stators ähnlich Fig. 11 und des sich dabei aufgebauten Polfeldes zu einem Zeitpunkt, zu dem in einem der Stromkreise der Strom 0 fließt;
- Fig. 13: eine schematische Darstellung der Gesamtströme aufgrund aller drei Stromkreise in der erfindungsgemäßen Statorwicklung sofern in allen drei Stromkreisen der Maximalstrom I fließt;
- Fig. 14: eine schematische Darstellung der gesamten Ströme in der erfindungsgemäßen Statorwicklung sofern in einem Stromkreis der Strom 0 und in den anderen zwei Stromkreisen der Strom I fließt;
- Fig. 15: eine Darstellung des Zeitverlaufs der in den drei Stromkreisen fließenden Ströme gemäß einer ersten Möglichkeit;
- Fig. 16: eine schematische Darstellung des Zeitverlaufs des Stroms der in allen drei Stromkreisen verlaufenden Ströme über der Zeitachse gemäß der bevorzugten Ausführungsform;
- Fig. 17: eine schematische Polygonschaltung für ein zweites Ausführungsbeispiel;
- Fig. 18: eine schematische vereinfachte Darstellung der Durchschleifung zweier Teilwicklungen bei dem zweiten Ausführungsbeispiel und
- Fig. 19: eine schematische Darstellung der Durchschleifung zweier Teilwicklungen bei einem dritten Ausführungsbeispiel gemäß Fig. 17.

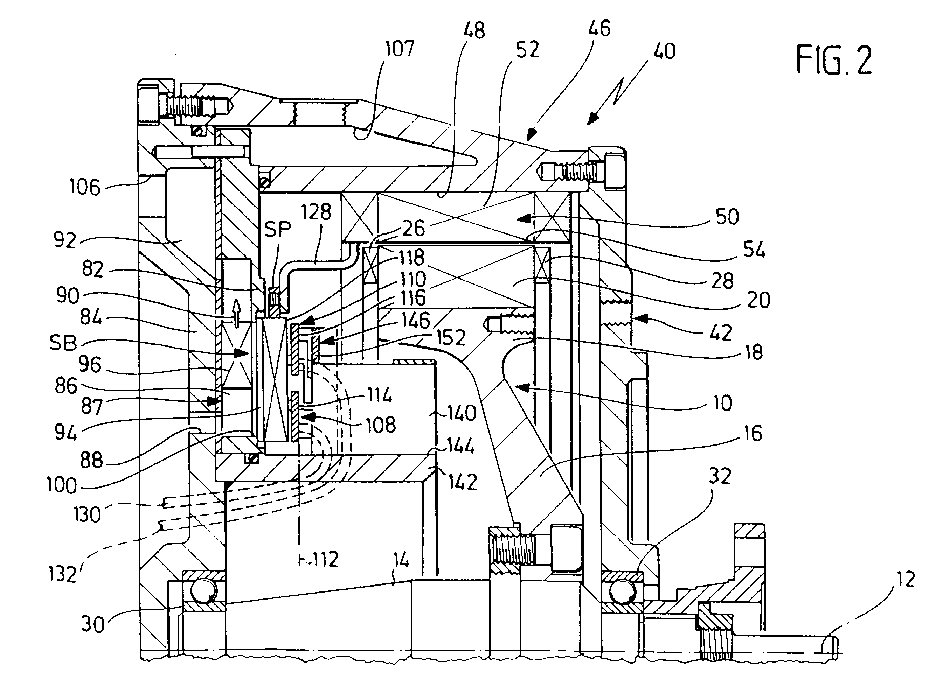

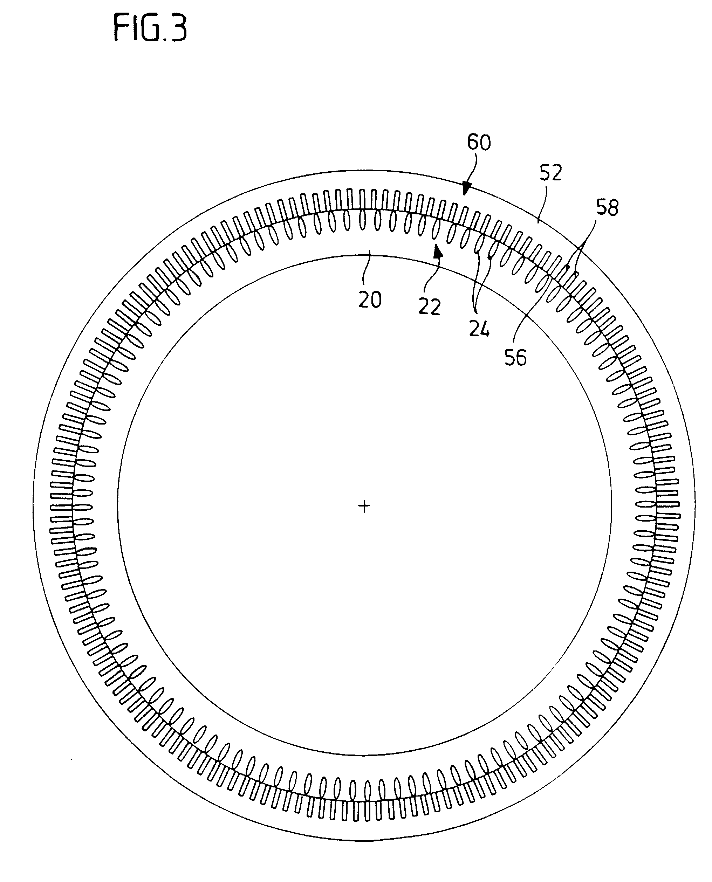

Ein Ausführungsbeispiel einer erfindungsgemäßen Elektromaschine ist als Asynchronmotor aufgebaut und umfaßt, wie in Fig. 2 dargestellt, einen Rotor 10 mit einer um eine Rotorachse 12 drehbaren Rotorwelle 14, welche einen Rotorflansch 16 trägt, der seinerseits an seinem radial außenliegenden Ende als Tragschulter 18 ausgeformt ist, auf welcher ein als Ganzes mit 20 bezeichneter, als Blechpaket ausgebildeter Wicklungsring sitzt, in welchem, wie in Fig. 3 dargestellt, eine als Ganzes mit 22 bezeichnete Rotorwicklung sitzt, die als Kurzschlußwicklung ausgebildet ist und parallel zur Rotorachse 12 verlaufende und in Ausnehmungen liegende Wicklungsstäbe 24 aufweist, die jeweils stirnseitig mit jeweils einem Kurzschlußring 26 bzw. 28 kurzgeschlossen sind.

Der Rotor 10 ist seinerseits vorzugsweise über als Wälzlager ausgebildete Lager 30 und 32 gegenüber einem als Ganzes mit 40 bezeichneten Maschinengehäuse gelagert, welches ein vorderes Lagerschild 42 und ein hinteres Lagerschild 44 umfaßt sowie einen zwischen den Lagerschilden 42 und 44 liegenden äußeren Gehäusemantel 46, welcher fest mit den beiden Lagerschilden 42 und 44 verbunden ist.

An dem Gehäusemantel 46 ist auf einer Innenseite 48 ein als Ganzes mit 50 bezeichneter Stator gehalten, welcher einen als Blechpaket ausgebildeten Wicklungsring 52 aufweist, der an der Innenseite 48 des Gehäusemantels 46 fixiert ist und den Wicklungsring 20 des Rotors 10 mit einem geringen dazwischenliegenden Luftspalt 54 umgreift.

Wie in Fig. 3 dargestellt, sind von einer inneren Zylinderfläche 56 des Wicklungsrings 52 ausgehend in diesem Polnuten 58 vorgesehen, durch welche die als Ganzes mit 60 bezeichnete Statorwicklung hindurch verläuft.

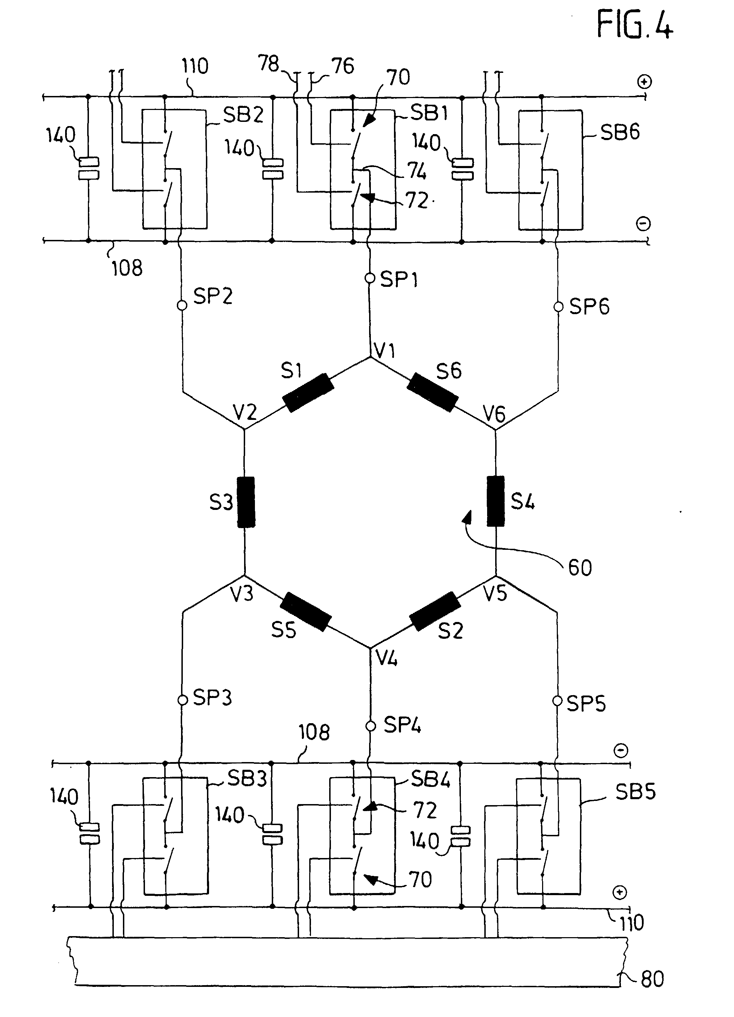

Die Statorwicklung 60 umfaßt, wie in Fig. 4 dargestellt, insgesamt sechs Stränge S1, S2, S3, S4, S5 und S6. Alle diese Stränge S1 bis S6 sind in Form einer Polygonschaltung zusammengeschaltet, wobei Ecken der Polygonschaltung als Verknüpfungspunkte V1 bis V6 der Stränge S1 bis S6 ausgebildet sind und jeweils zwischen zwei in der Polygonschaltung aufeinanderfolgenden Verknüpfungspunkten V einer der Stränge S1 bis S6 liegt. So liegt beispielsweise zwischen den Verknüpfungspunkten V1 und V2 der Strang S1, zwischen den Verknüpfungspunkten V2 und V3 der Strang S3, zwischen den Verknüpfungspunkten V3 und V4 der Strang S5, zwischen den Verknüpfungspunkten V4 und V5 der Strang S2, zwischen den Verknüpfungspunkten V5 und V6 der Strang S4 und zwischen den Verknüpfungspunkten V6 und V1 der Strang S6.

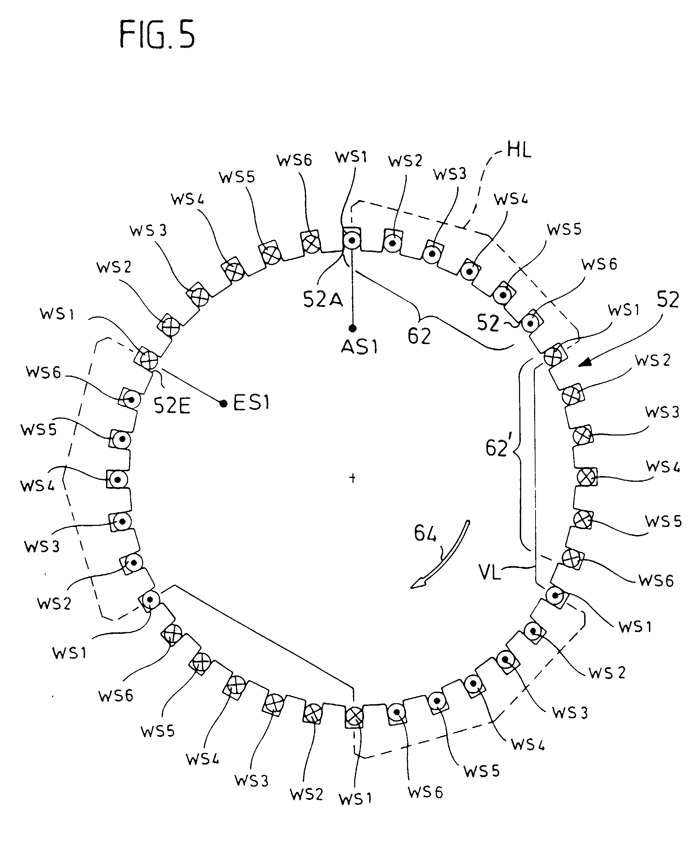

Jeder der Stränge S ist, wie in Fig. 5 anhand eines vereinfachten Wicklungsrings 52, mit weniger Polnuten 58 als in der Realität vorhanden, dargestellt. Dabei liegen die Windungen WS einander in der Polygonschaltung gegenüberliegender Stränge S nebeneinander. So folgt auf die Windung WS1 des Strangs S1 die Windung WS2 des Strangs S2, auf diese die Windung WS3 des Strangs S3, dann die Wicklung WS4 des Strangs S4, die Windung WS5 des Strangs S6 und schließlich die Windung WS6 des Strangs S6, wobei alle diese aufeinanderfolgenden Windungen WS1 bis WS6 beispielsweise zu einem bestimmten Zeitpunkt in derselben Richtung stromdurchflossen sind. Alle diese in den nebeneinanderliegenden Polnuten 52 liegenden Windungen WS1 bis WS6 der Stränge S1 bis S6 bilden gemeinsam einen als Polteilung 62 des Stators 50 bezeichneten Winkelsektor der Statorwicklung 60.

Nach einer derartigen Polteilung 62 wiederholt sich die Abfolge der in aufeinanderfolgenden Polnuten 52 liegenden Windungen WS1 bis WS6 in Form einer weiteren Polteilung 62', wobei in dieser weiteren Polteilung 62' die sechs nebeneinanderliegenden Windungen WS1 bis WS6 der Stränge S1 bis S6 in umgekehrter Richtung zur vorhergehenden Polteilung 62 stromdurchflossen sind, wie in Fig. 5 zeichnerisch dargestellt ist.

Auf diese Polteilung 62' folgt wiederum eine Polteilung mit in gleicher Richtung wie der Polteilung 62 stromdurchflossenen und in aufeinanderfolgende Polnuten 52 nebeneinanderliegenden WS1 bis WS6.

Diese Polteilungen 62 und 62' folgen so lange alternierend, bis nach einem Umlauf im Wicklungsring 52 sich die letzte Polteilung 62' an die erste Polteilung 62 anschließt. Das dargestellte Ausführungsbeispiel weist insgesamt 28 Polteilungen 62, 62' auf, so daß sich ein Polfeld mit 28 Polen erzeugen läßt.

Die Windungen WS1 in aufeinanderfolgenden Polteilungen sind durch beiderseits des Wicklungsrings 52 angeordnete hintere Verbindungsleitungen HL und vordere Verbindungsleitungen VL so miteinander verbunden, daß in aufeinanderfolgenden Polteilungen 62, 62' in jeweils derselben Windung WS1 der Strom in Richtung der Rotorachse 12 gesehen jeweils in umgekehrten Richtungen fließt, wie in Fig. 5 am Beispiel der Windungen WS1 in den aufeinanderfolgenden Polteilungen 62 und 62' angedeutet.

Die Windungen WS1 des Strangs S1 sind an für die Verbindung mit den Verknüpfungspunkten V1 und V2 geeigneten Stellen des Wicklungsrings 52 herausgeführt, wobei dies zwischen aufeinanderfolgenden Polteilungen 62 und 62' prinzipiell an beliebiger Wickelposition im Wicklungsring 52 erfolgen kann. Beispielsweise liegt in Fig. 5 der Anfang AS1 des Strangs S1 in einer Polnut 52A und damit ein Ende ES1 des Strangs S1 in Wicklungsrichtung 64 des Strangs S1 gesehen in der Polnut 52E, welche gegenüber der Polnut 52A um sechs Polnuten entgegengesetzt zur Wicklungsrichtung 64 versetzt liegt.

Die übrigen Stränge S2 bis S6 sind in analoger Weise in den Wicklungsring 52 eingewickelt, wobei die Wicklungsrichtung der Stränge S1, S3 und S5 der Wicklungsrichtung 64 entspricht, während die Wicklungsrichtung der Stränge S6, S4 und S2 entgegengesetzt zur Wicklungsrichtung 64 verläuft.

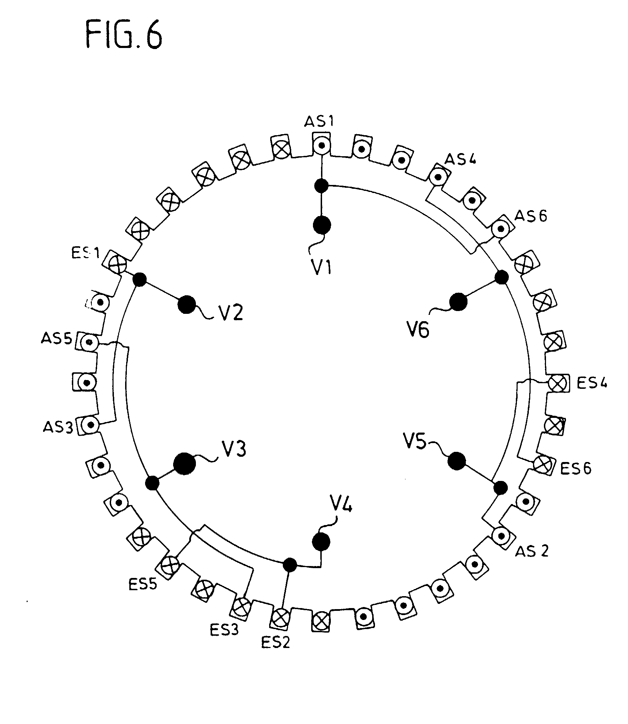

Darüber hinaus sind Anfang und Ende der einzelnen Stränge S1 bis S6 so gelegt, daß sie möglichst nahe bei dem jeweiligen Verknüpfungspunkt V liegen. So liegen beispielsweise, wie in Fig. 6 dargestellt, die Anfänge AS1 und AS6 der Stränge S1 und S6 nahe beim Verknüpfungspunkt V1, der Anfang AS3 des Strangs S3 und das Ende ES1 des Strangs S1 nahe beim Verknüpfungspunkt V2, der Anfang AS5 des Strangs S5 und das Ende ES3 des Strangs S3 nahe beim Verknüpfungspunkt V3, das Ende ES5 und das Ende ES2 nahe beim Verknüpfungspunkt V4, der Anfang AS2 des Strangs S2 und das Ende ES4 des Strangs S4 nahe beim Verknüpfungspunkt V5 und das Ende ES6 des Strangs S6 und der Anfang AS4 des Strangs S4 nahe beim Verknüpfungspunkt V6.

Die Speisung der einzelnen Stränge S1 bis S6 erfolgt nun, wie in Fig. 4 dargestellt, über den einzelnen Verknüpfungspunkten V1 bis V6 zugeordnete Speiseanschlüsse SP1 bis SP6 mit Leistungsstellerblöcken SB1 bis SB6 verbunden, wobei jedem der Speiseanschlüsse SP1 bis SP6 der entsprechende Leistungsstellerblock SB1 bis SB6 zugeordnet ist.

Jeder der Leistungsstellerblöcke SB1 bis SB6 umfaßt zwei Schalter 70 und 72, wobei mit dem Schalter 70 ein Mittelabgriff 74 mit einer positiven Zwischenkreisspannung + und mit dem Schalter 72 der Mittelabgriff 74 mit einer negativen Zwischenkreisspannung - verbindbar ist und der Mittelabgriff 74 wiederum mit dem jeweiligen Speiseanschluß SP direkt verbunden ist.

Bei den Schaltern 70 und 72 handelt es sich vorzugsweise um Halbleiterschalter, welche über Steuerleitungen 76 und 78 ansteuerbar sind.

Alle Steuerleitungen 76 und 78 jedes der Leistungsstellerblöcke SB1 bis SB6 sind zu einer gemeinsamen, als Ganzes mit 80 bezeichneten Stellersteuerung geführt und werden von dieser gemeinsam angesteuert.

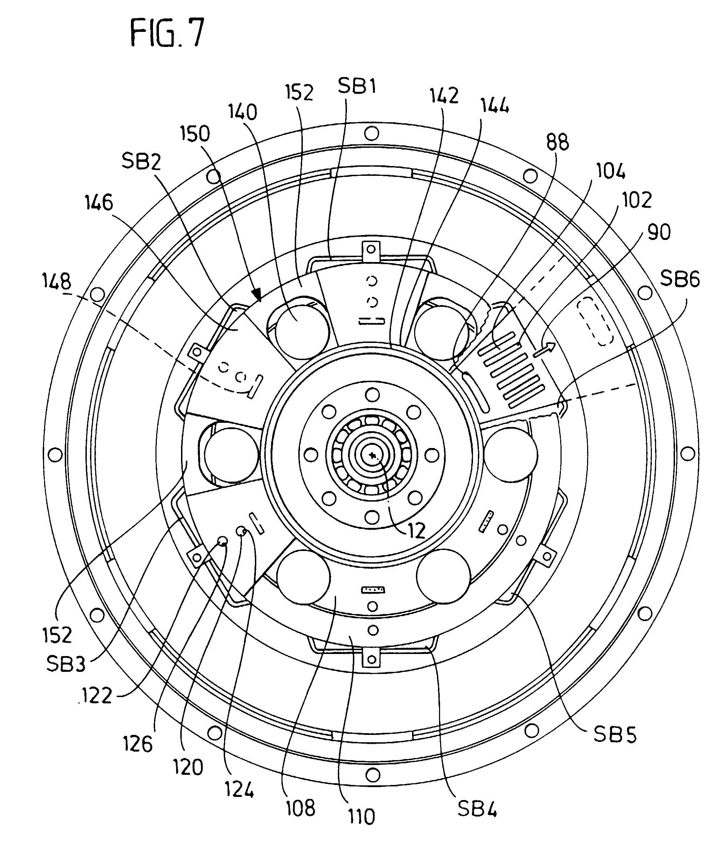

Wie aus Fig. 4 erkennbar, ist die gesamte Statorwicklung 60 somit über insgesamt 6 Leistungsstellerblöcke SB1 bis SB6 gespeist. Hierzu sind, wie in den Fig. 1, 2 und 7 erkennbar, die Leistungsstellerblöcke SB1 bis SB6 in gleichem radialem Abstand von der Rotorachse 12 und um diese herum angeordnet, wobei alle Leistungsstellerblöcke SB1 bis SB6 an einer Wand 82 des hinteren Lagerschildes 44 sitzen, und zwischen dieser Wand 82 und einer Rückwand 84 des hinteren Lagerschildes 44 ein Kühlmittelkanal 86 vorgesehen ist, welcher von einem in eine definierte Richtung strömenden Kühlmittel durchströmt ist. Die Wand 82, die Rückwand 84 und der Kühlmittelkanal 86 bilden gemeinsam ein Kühlelement 87.

Vorzugsweise verläuft der Kühlmittelkanal 86 in einer radialen Richtung zur Rotorachse 12 und ist mit einem radial innenliegenden Kühlmitteleinlaß 88 versehen, von welchem ausgehend dann das Kühlmittel in radialer Richtung 90 nach außen zu einem Sammelkanal 92 führt, von welchem ausgehend dann das gesammelte Kühlmittel, beispielsweise durch einen Kühlmittelauslaß abströmt.

Jeder der Leistungsstellerblöcke SB umfaßt einen Montageflansch 94, und, einen auf einer Seite des Montageflansches 94 sitzenden Kühlkörper 96, der thermisch mit den Schaltern 70 und 72 gekoppelt ist, und ein auf der dem Kühlkörper 96 gegenüberliegenden Seite des Montageflansches 94 sitzenden Schaltungskörper 98, in welchem elektronische Bauelemente des Leistungsstellerblocks SB untergebracht und vorzugsweise zum Schutz in einem Vergußblock vergossen sind.

Damit jeder Leistungsstellerblock SB mit seinem Kühlkörper 96 in den Kühlmittelkanal 68 eintauchen kann, ist die Wand 82 am Sitz jedes Leistungsstellerblocks SB mit einem Durchbruch 100 versehen, welcher mittels des Montageflansches 94 eines an der Wand 82 montierten Leistungsstellerblocks SB kühlmitteldicht verschließbar ist, so daß der kühlmittelkanalseitig des Montageflansches 94 angeordnete Kühlkörper 96 voll in dem Kühlmittelkanal 86 liegt und von dem Kühlmittel in der Strömungsrichtung 90 desselben umströmt ist, wobei vorzugsweise der Kühlkörper 96 noch mit parallel zur Strömungsrichtung 90 des Kühlmittels verlaufenden Rippen 102 und dazwischenliegenden Nuten 104 versehen, durch welche das Kühlmittel in Richtung seiner Strömungsrichtung 90 hindurchströmt.

Vorzugsweise ist zumindest für jeden Leistungsstellerblock LSB ein separater Kühlmitteleinlaß 88 vorgesehen, so daß jeder der Leistungsstellerblöcke SB mit Kühlmittel definierter Temperatur anströmbar ist, während beispielsweise die Abfuhr des Kühlmittels über den rings umlaufenden Sammelkanal 92 und einen gemeinsamen Auslaß 106 erfolgen kann.

Zusätzlich erfolgt eine Kühlung des Stators 50 noch über thermische Kopplung desselben mit dem Gehäusemantel 46, welcher ebenfalls einen Kühlkanal 107 aufweist. Vorzugsweise sind beide Kühlkanäle 86 und 107 in einem gemeinsamen Kühlsystem angeordnet.

Eine Stromversorgung der einzelnen Leistungsstellerblöcke SB erfolgt über zwei konzentrisch zur Rotorachse 12 angeordnete Ringleiter 108 und 110, welche aus Flachmaterial hergestellt sind, und in einer senkrecht zur Rotorachse 12 verlaufenden Ebene 112 liegen, wobei deren Flachseiten 114 und 116 parallel zu der Ebene 112 verlaufen. Die Ringleiter 108 und 110 liegen dabei auf einer dem Montageflansch 94 abgewandten Oberseite 118 des Schaltungskörpers 98 der Leistungsstellerblöcke SB auf und sind mit von dem Schaltungskörper 98 abstehenden Anschlußzapfen 120 und 122 verbunden, wobei die Anschlußzapfen 120 und 122 zweckmäßigerweise Bohrungen 124 bzw. 126 in den Ringleitern 108 bzw. 110 durchgreifen und mit diesen verschraubbar sind. Die Ringleiter 108 und 110 werden daher über die Leistungsstellerblöcke SB von der Wand 82 des hinteren Lagerschildes 44 getragen.

Der Ringleiter 108 liegt dabei beispielsweise auf der negativen Zwischenkreisspannung -, während der Ringleiter 110 auf der positiven Zwischenkreisspannung + liegt.

Die Ausbildung der Stromzuführung zu den Leistungsstellerblöcken SB über die Ringleiter 108 und 110 hat den großen Vorteil, daß mit diesen Ringleitern 108 und 110 ein Zwischenkreis mit niedriger Induktivität gebildet werden kann.

Die Stromeinspeisung in die beiden Ringleiter 108 und 110 erfolgt über aus dem Maschinengehäuse 40, vorzugsweise dem hinteren Lagerschild 44 desselben, nahe des Lagers 30 herausgeführte Zwischenkreiszuleitungen 130 bzw. 132, die mit den Ringleitern 108 bzw. 110 verbunden sind. Vorzugsweise sind zur Reduzierung des Querschnittes derartiger Zwischenkreiszuleitungen 130 und 132 für jeden der Ringleiter 108 bzw. 110 mehrere, in gleichen Winkelabständen mit den Ringleitern 108 bzw. 110 verbundene Zwischenkreiszuleitungen 130 bzw. 132 vorgesehen, welche zu jeweils einem gemeinsamen Zwischenkreisspeiseanschluß außerhalb des Maschinengehäuses 40 geführt sind.

Zur Glättung des in den Ringleitern 108 bzw. 110 fließenden Stromes ist jedem Leistungsstellerblock SB mindestens ein Zwischenkreisspeicherkondensator 140 zugeordnet, welcher auf einer dem jeweiligen Leistungsstellerblock SB gegenüberliegenden Seite der Ebene 112 sitzt und ebenfalls mit den Ringleitern 108 bzw. 110, vorzugsweise möglichst nahe der Anschlußzapfen 120 bzw. 122 des jeweiligen Leistungsstellerblocks SB, verbunden ist. Eine bevorzugte Anordnung sieht vor, daß die Zwischenkreisspeicherkondensatoren 140 seitlich des jeweiligen Leistungsstellerblocks SB sitzen, so daß deren Anschlüsse auf Lücke zwischen zwei aufeinanderfolgenden Leistungsstellerblöcken SB mit den Ringleitern 108 bzw. 110 verbundbar sind.

Die Zwischenkreisspeicherkondensatoren 140 sind dabei durch einen von dem hinteren Lagerschild 44 ins Innere des Maschinengehäuses 40 hineinragenden Ringflansch 142 gegen Vibrationen abgestützt, welcher eine zylindrisch zur Rotorachse 12 umlaufende Stützfläche 144 aufweist, auf welcher die Zwischenkreisspeicherkondensatoren 140 fixiert sind.

Eine Stromeinspeisung in die einzelnen Stränge S der Statorwicklung 60 erfolgt über von dem Schaltungskörper in radialer Richtung zur Statorwicklung 60 hin abstehende als Anschlußfahnen ausgebildete Speiseanschlüsse SP, welche gleichzeitig auch die Verknüpfungspunkte V darstellen und von denen kurze Leitungen 128 zu den einzelnen Strängen S führen.

Darüber hinaus ist die Stellersteuerung 80 in einer oder in mehreren Schaltungsblöcken 146 angeordnet, welche jeweils auf der einem Leistungsstellerblock SB gegenüberliegenden Seite der Ebene 112 zwischen den Zwischenkreisspeicherkondensator 140 und ebenfalls durch die Stützfläche 144 abgestützt sind. Eine Verbindung zwischen den Leistungsstellerblöcken SB und den Schaltungsblöcken 146 erfolgt dabei über eine Steckerleiste 148, welche einen der Ringleiter, beispielsweise den Ringleiter 108 durchgreift.

Die die Stellersteuerung 80 bildenden Schaltungsblöcke 146 sitzen vorzugsweise auf einer gemeinsamen Grundplatte 150, welche mit Stegen 152 die Zwischenkreisspeicherkondensatoren 140 übergreift.

Vorzugsweise ist die Stellersteuerung 80 aus einer der Zahl der Leistungsstellerblöcke SB entsprechenden Zahl von Schaltungsblöcken 146 ausgebildet, die auf einer ringförmig um die Rotorachse 10 umlaufenden Grundplatte 150 sitzen. Die Grundplatte sitzt dabei auf der den Leistungsstellerblöcken SB gegenüberliegenden Seite der Ebene 112 und liegt auf den Ringleitern 108 und 110 auf.

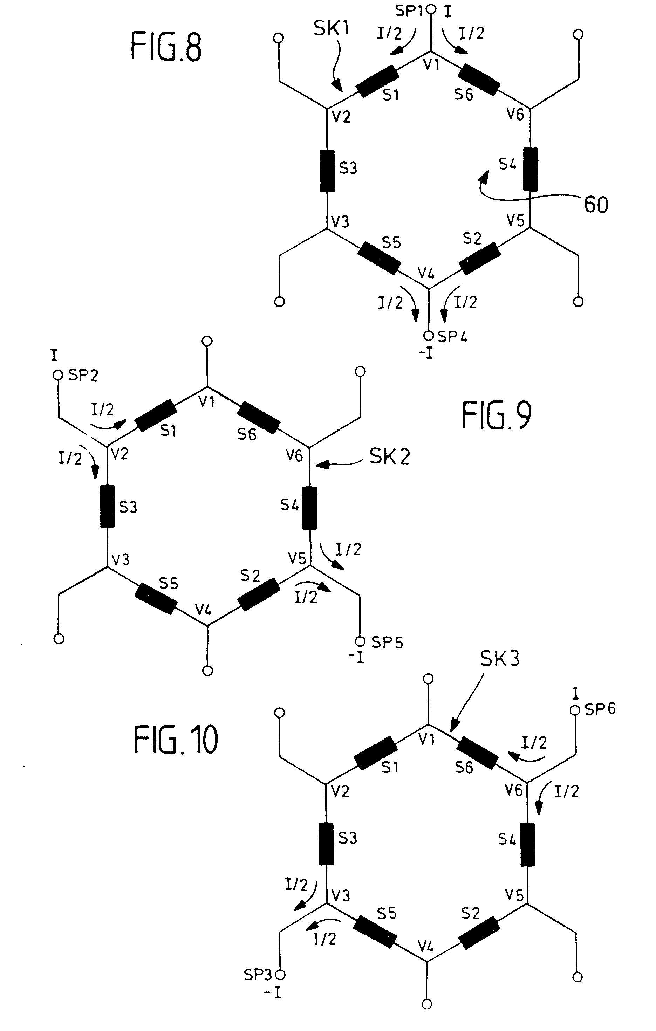

Die Speisung der als Ganzes mit 60 bezeichneten Statorwicklung über die Leistungsstellerblöcke SB erfolgt nun, wie in Fig. 8, 9 und 10 dargestellt, derart, daß einander gegenüberliegenden Verknüpfungspunkte V jeweils in einem gemeinsamen Stromkreis SK liegen und die Stromkreise gegeneinander getrennt sind. Dies erfolgt durch entsprechende Ansteuerung der Schalter 70 und 72 aller Leistungsstellerblöcke SB mittels der Stellersteuerung 80 in der gewünschten Art und Weise.

Beispielsweise werden die Leistungsstellerblöcke SB1 und SB4 so gesteuert, daß durch den Speiseanschluß SP1 ein Strom I in die Statorwicklung 60 fließt. Dieser Strom I teilt sich am Verknüpfungspunkt V1 auf in zwei Teilströme I/2, wobei der erste Teilstrom I/2 über den Strang S1, den Verknüpfungspunkt V2, den Strang S3, den Verknüpfungspunkt V3 und den Strang S5 zum Verknüpfungspunkt V4 fließt, während der zweite Strom I/2 über den Strang S6, den Verknüpfungspunkt V6, den Strang S4, den Verknüpfungspunkt V5 und den Strang S2 zum Verknüpfungspunkt V4 fließt. Dort addieren sich die Ströme I/2 wieder zum Strom minus I, welcher über den Speiseanschluß SP4 fließt. In diesem Fall ist der Schalter 70 des Leistungsstellerblocks SB1 geschlossen, der Schalter 72 dieses Leistungsstellerblocks SB1 geöffnet, während der Schalter 72 des Leistungsstellerblocks SB4 geschlossen ist und der Schalter 70 des Leistungsstellerblocks SB4 geöffnet.

In diesem als SK1 bezeichneten Stromkreis bilden die Stränge S1, S3 und S5 einen Satz hintereinander geschalteter Stränge, während die Stränge S6, S4 und S2 ebenfalls einen Satz hintereinander geschalteter Stränge bilden und die beiden Sätze ihrerseits bezogen auf die Speiseanschlüsse SP1 und SP4 parallel geschaltet sind.

Wird nun in gleicher Weise, wie in Fig. 8 dargestellt, über den Speiseanschluß SP2 ein Strom I der Statorwicklung 60 zugeführt, so teilt sich dieser Strom I am Verknüpfungspunkt V2 in zwei Teilströme I/2 auf, wobei einer der Teilströme I/2 über den Strang S3 zum Verknüpfungspunkt V3, den Strang S5 zum Verknüpfungspunkt V4 und den Strang S2 zum Verknüpfungspunkt V5 fließt, während der andere Teilstrom I/2 über den Strang S1 zum Verknüpfungspunkt V1, den Strang S6 zum Verknüpfungspunkt V6 und den Strang S4 ebenfalls zum Verknüpfungspunkt V5 fließt und in dem Verknüpfungspunkt V5 sich die beiden Ströme I/2 wieder zum Strom minus I addieren, welcher durch den Speiseanschluß SP5 fließt. Somit wird hierdurch ein Stromkreis SK2 gebildet.

Ferner wird ein Stromkreis SK3 dadurch gebildet, daß über den Speiseanschluß SP6 ein Strom I zum Verknüpfungspunkt V6 fließt, sich dort ebenfalls in zwei Teilströme I/2 aufteilt, wobei ein erster Teilstrom I/2 über den Strang S6 zum Verknüpfungspunkt V1, von dort über den Strang S1 zum Verknüpfungspunkt V2 und über den Strang S3 zum Verknüpfungspunkt V3 fließt.

Der andere Strom I/2 fließt über den Strangs S4 zum Verknüpfungspunkt V5, von dort über den Strang S2 zum Verknüpfungspunkt V4 und schließlich über den Strang S5 zum Verknüpfungspunkt V3. Im Verknüpfungspunkt V3 addieren sich wieder die beiden Ströme I/2 zum Strom minus I, welcher durch den Speiseanschluß SP3 fließt.

Die Leistungsstellerblöcke SB sind nun alle so geschaltet, daß durch alle drei Stromkreis SK1, SK2 und SK3 ein periodischer Wechselstrom mit vorzugsweise gleicher Periodizität Amplitude und Halbwellenform fließt, allerdings sind die Wechselströme relativ zueinander phasenversetzt.

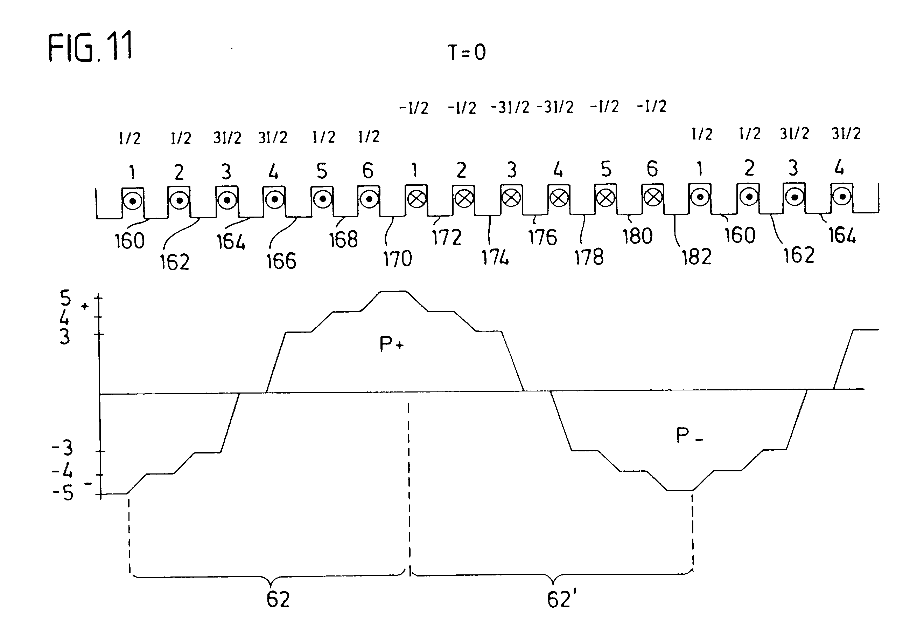

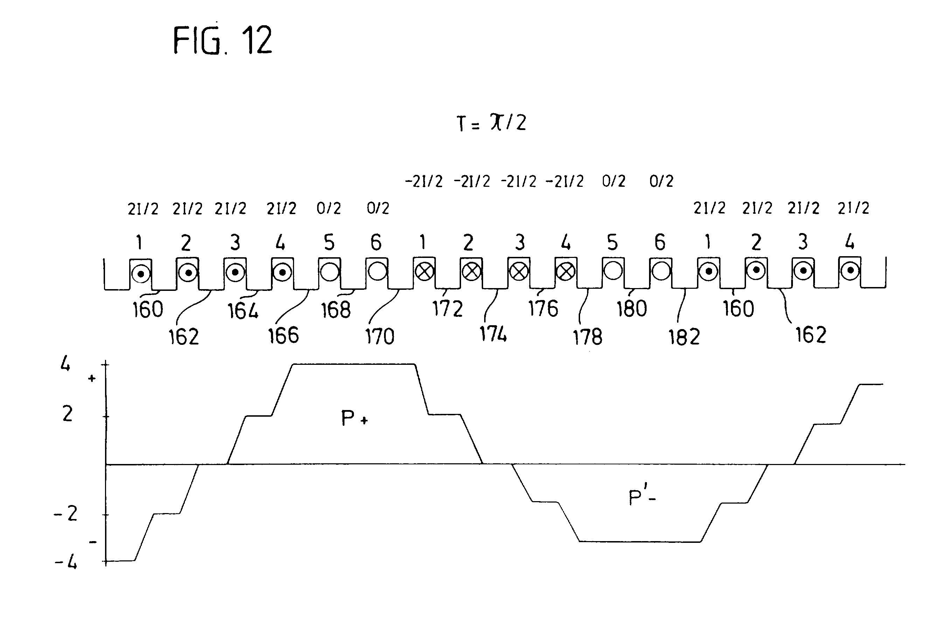

Durch die erfindungsgemäße Verwendung dreier voneinander getrennter Stromkreise SK1, SK2 und SK3 läßt sich in der Statorwicklung 60 ein Polfeld aufbauen, wobei dieses Polfeld, wie in den Fig. 11 und 12 dargestellt, unterschiedliche Formen aufweisen kann.

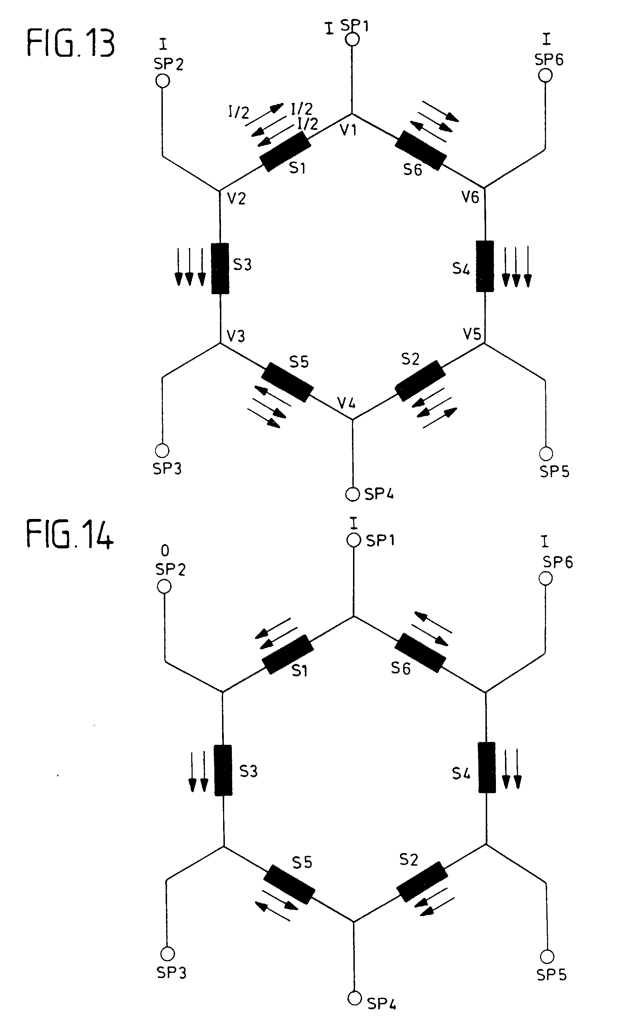

Ausgehend von dem Fall, daß zu einem Zeitpunkt T=0 in allen drei Stromkreisen SK1 bis SK3 der Strom I fließt, so ergibt sich, wie in Fig. 13 dargestellt, daß in dem Strang S1 aufgrund der Stromkreise SK1 und SK3 zweimal der Strom I/2 vom Verknüpfungspunkt V1 in Richtung des Verknüpfungspunkts V2 fließt, während aufgrund des Stromkreises SK2 einmal der Strom I/2 vom Verknüpfungspunkt V2 zum Verknüpfungspunkt V1 fließt, so daß insgesamt, wie in Fig. 11 dargestellt durch den Strang S1 der Strom I/2 fließt.

Gleiches gilt für den Strang S2.

Durch den Strang S3 fließt aufgrund aller drei Stromkreise SK1, SK2 und SK3 dreimal der Strom I/2 vom Verknüpfungspunkt V2 zum Verknüpfungspunkt V3. Gleiches gilt für den Strang S4.

Durch den Strang S5 fließt aufgrund der Stromkreise SK1 und SK2 zweimal der Strom I/2 vom Verknüpfungspunkt V3 zum Verknüpfungspunkt V4, während aufgrund des Stromkreises SK3 einmal der Strom I/2 vom Verknüpfungspunkt V4 zum Verknüpfungspunkt V3 fließt, so daß durch den Strang S5 insgesamt der Strom I/2 fließt.

Die gleiche Überlegung gilt für den Strang S6.

Betrachtet man nun die Durchflutung der einzelnen Zähne 160 bis 182 zweier aufeinanderfolgender Polteilungen 62 und 62' des Wicklungsrings 52 des Stators 50, so addieren sich die Durchflutungen des Zahns 160 zu -4I, die Durchflutungen des Zahns 162 zu -3I, die Durchflutungen des Zahns 164 zu 0I, die Durchflutungen des Zahns 166 zu 3I, die Durchflutungen des Zahns 168 zu 4I und die Durchflutungen des Zahns 170 zu 5I, die Durchflutungen des Zahns 172 zu 4I, die Durchflutungen des Zahns 174 zu 3I, die Durchflutungen des Zahns 176 zu 0I, die Durchflutungen des Zahns 178 zu -3I, die Durchflutungen des Zahns 180 zu -4I und die Durchflutungen des Zahns 182 zu -5I, wie in Fig. 11 dargestellt.

Aus der Summe der in Fig. 11 dargestellten magnetischen Durchflutungen ergibt sich Form und Stärke der einzelnen Pole des Polfeldes. So liegt zwischen dem Zahn 164 und dem Zahn 176 ein positiver Pol P+, während zwischen dem Zahn 176 und dem Zahn 164 ein negativer Pol P- liegt.

Um nun das Polfeld mit den Polen P+ und P- um die Rotorachse 12 im Stator 50 umlaufen zu lassen, wird die Stromrichtung in einem der Stromkreise SK1 bis SK3 zunächst 0 gesetzt und dann umgepolt.

Ist beispielsweise der Strom im Stromkreis SK2 gleich 0, so ergibt sich, wie in Fig. 14 dargestellt, eine Stromverteilung derart, daß der Strang S1 zweimal von dem Strom I/2 durchflossen wird, gleiches gilt für den Strang S3, der Strang S5 wird zweimal von dem Strom I/2, allerdings in umgekehrter Richtung durchflossen, so daß in Summe der Strom I=0 auftritt, der Strang S2 wird zweimal vom Strom I/2 durchflossen, der Strang S4 in gleicher Weise und beim Strang S6 addieren sich die beiden in unterschiedlichen Richtungen fließenden Ströme I/2 zu I=0. Dies gibt die in Fig. 12 dargestellte Verteilung der Ströme in den einzelnen Strängen.

In diesem Fall addieren sich die Durchflutungen des Zahns 160 zu -2I, die des Zahns 162 zu 0, die des Zahns 164 zu 2I, die der Zähne 166, 168 und 170 zu 4,I, die des Zahns 172 zu 2I, die Zahns 174 zu 0, die des Zahns 176 zu -2I und die der Zähne 178, 180 und 182 zu -4I.

Das sich dabei ergebende Polfeld zeigt einen Pol P'+ zwischen den Zähnen 162 und 174 und einen Pol P'- zwischen den Zähnen 174 und 162.

Im Vergleich zu Fig. 11 ist somit zu erkennen, daß der zum Zeitpunkt T=0 zwischen den Zähnen 164 und 176 liegende Pol P+ um einen Zahn weiter nach links gewandert ist und nunmehr zwischen den Zähnen 162 und 174 liegt, allerdings hinsichtlich der Stärke des Feldes geringfügig abgenommen hat.

Durch Umkehr der Stromrichtung in dem Stromkreis SK2 wandert nun das Polfeld erneut weiter nach links, so daß der Pol P+ zwischen den Zähnen 160 und 172 liegt und nun wäre wiederum die zum Zeitpunkt T=0 dargestellte Form und Stärke aufweist.

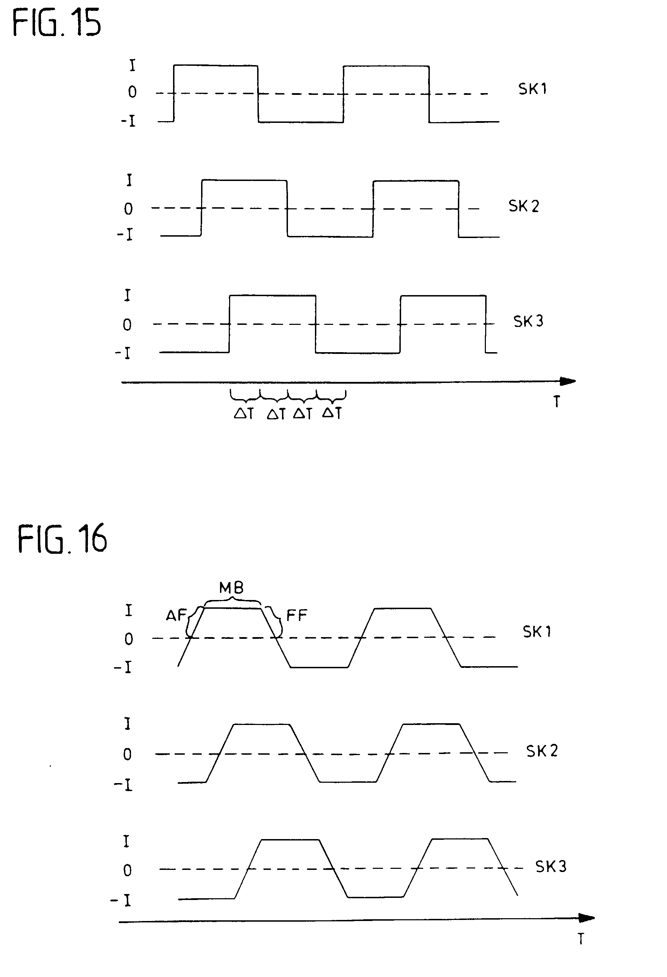

Der im Zusammenhang mit den Fig. 8 bis 14 erläuterten Aufbau des Polfeldes und die Bewegung der Pole ist im Prinzip mit einem periodisch oszillierenden Rechteckstrom generierbar, so daß die Schalter 70 und 72 entweder geöffnet oder geschlossen sein müssen. Eine derartige Ansteuerung ist beispielsweise in Fig. 15 für die Stromkreise SK1 bis SK3 dargestellt. Der Nachteil bei einer derartigen Speisung der Statorwicklung 60 ist darin zu sehen, daß in stets aufeinanderfolgenden Zeiträumen δT keine Änderung der magnetischen Durchflutung in den einzelnen Strängen S1 bis S6 erfolgt und somit während dieser Intervalle δT das Polfeld mit den Polen P+ und P- nicht wandert. Dies führt dazu, daß ein derart gespeister Asynchronmotor zumindest bei kleinen Drehzahlen ruckartig läuft.

Ein derartiges ruckartiges Laufen kann dadurch verhindert werden, daß man, wie in Fig. 16 dargestellt in den Stromkreisen SK1 bis SK3 einen Strom mit einer trapezähnlichen Halbwellenform fließen läßt, wobei eine Änderung des Stroms von -I nach +I während eines Phasenwinkels von 360° dividiert durch die Zahl der Stränge S erfolgt. Damit ist sichergestellt, daß sich zu jedem Zeitpunkt das Polfeld mit den Polen P+ und P-hinsichtlich Stärke und Lage verändert und weiter wandert, so daß ein ruckfreier Lauf entsteht.

Hiermit ist eine Halbwelle erhältlich mit einer ansteigenden Flanke AF und einer abfallenden Flanke FF, die zusammen den Phasenwinkel von 360° dividiert durch die Zahl der Teilwicklungen S ergibt. Ferner ist ein verbreiterter Maximalbereich MB erhältlich, welcher während eines Phasenwinkels von 360° dividiert durch die halbe Zahl der Teilwicklungen vorliegt.

Darüber hinaus stellt die Speisung der Stromkreise SK1 bis SK3 mit Strom mit trapezähnlicher Halbwellenform aufgrund des Durchflutungsgesetzes eine maximale Feldstärke in den jeweiligen Zähnen 160 bis 182 sicher.

Ändert man die trapezähnliche Halbwellenform noch dahingehend ab, daß der Maximalbereich vor dem Übergang in die ansteigende und abfallende Flanke noch erhöht wird und somit zwei seitliche Maxima erhält, so kann man damit die zum in Fig. 12 dargestellten Zeitpunkt auftretende Reduktion der Stärke des Feldes gegenüber der Stärke bei dem in Fig. 11 dargestellten Zeitpunkt verringern, wenn nicht kompensieren.

Vergleicht man den Effektivstrombedarf bezogen auf die effektive Polinduktion des vorstehend beschriebenen Ausführungsbeispiels der erfindungsgemäßen Lösung mit dem für die Sternschaltung bei sinusförmiger, dreistrangiger Drehstromspeisung, so ergibt sich bei der vorliegenden Erfindung eine Reduktion des Effektivstrombedarfs um den Faktor 2,04 und somit eine entsprechende Entlastung der Leistungsstellerblöcke SB pro Strang.

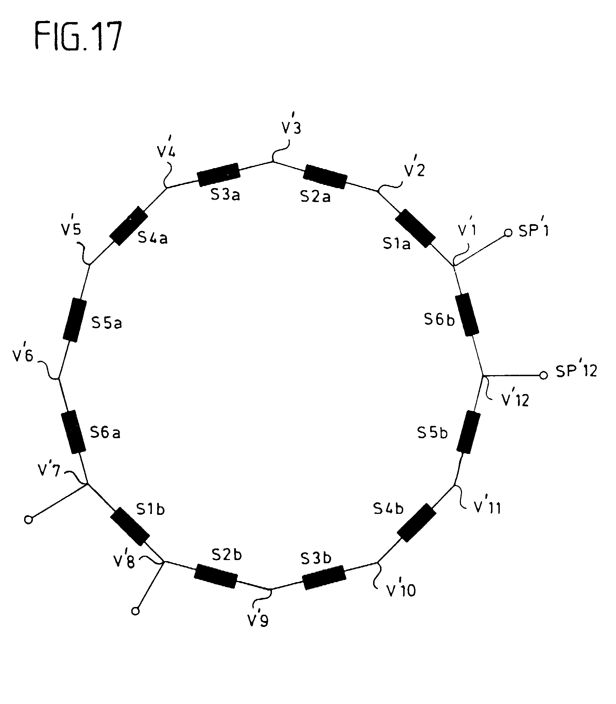

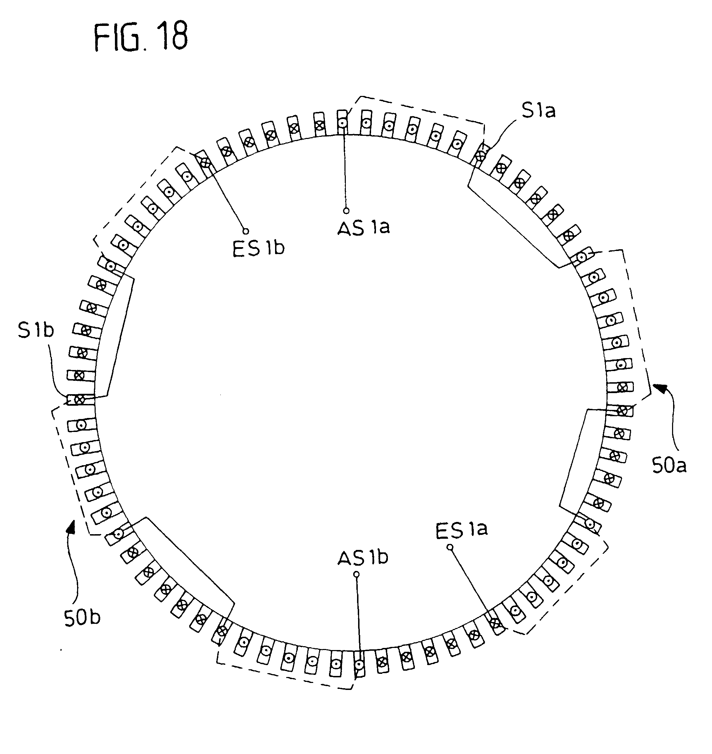

Das erfindungsgemäße Konzept ist prinzipiell bei Statorwicklungen 60 mit mehr als zwei Strängen einsetzbar, wobei die Stränge nicht als Ganzes zwischen zwei Verknüpfungspunkten V der Polygonschaltung liegen müssen. So ist es beispielsweise, wie in Fig. 17 und 18 dargestellt, bei einem zweiten Ausführungsbeispiel vorgesehen, jeden Strang S zu teilen und jeweils hälftige Stränge Sla und S1b, S2a und S2b etc. auf einander gegenüberliegenden Seiten der Polygonschaltung zu legen. So ist beispielsweise in Fig. 17 eine 12-fache Polygonschaltung dargestellt, bei welcher zwischen einem Verknüpfungspunkt V'1 und einem Verknüpfungspunkt V'2 eine Teilwicklung S1A des Strangs S1 geschaltet und zwischen den gegenüberliegenden Verknüpfungspunkten V'7 und V'8 die zweite Teilwicklung S1B des Strangs S1, darauf folgt zwischen den Verknüpfungspunkten V'2 und V'3 die Teilwicklung S2A des Strangs S2 und den gegenüberliegenden Verknüpfungspunkten V'8 und V'9 die Teilwicklung S2B des Strangs S2 und so weiter.

Ferner ist bei diesen Teilwicklungen S1A und S1B der Stränge vorgesehen, daß jede Teilwicklung S1A oder S1B nicht um den ganzen Umfang des Stators 50 gewickelt ist, sondern jeweils um den halben Umfang des Stators 50, wie in Fig. 18 dargestellt. So liegt die Teilwicklung Sla mit ihrem Anfang AS1a und ihrem Ende ESla in der rechten Hälfte 50a des Stators und die Teilwicklung Slb mit ihrem Anfang AS1b und ihrem Ende ESlb in der linken Hälfte 50b desselben. Der Anfang AS1a ist mit dem Verknüpfungspunkt V'1 verbunden und das Ende ESla mit dem Verknüpfungspunkt V'2. Ferner ist der Anfang ASlb mit dem Verknüpfungspunkt V'8 und das Ende ESlb mit dem Verknüpfungspunkt V'7 verbunden. Bei dieser Polygonschaltung gemäß dem zweiten Ausführungsbeispiel ist nun ebenfalls jeder Verknüpfungspunkt V' mit einem Speiseanschluß SP' verbunden, und jedem Speiseanschluß SP' ist ein Stellerblock SB in der im Zusammenhang mit dem ersten Ausführungsbeispiel beschriebenen Art und Weise zuzuordnen, wobei die Ansteuerung der Leistungsstellerblöcke SB in analoger Fortbildung des ersten Ausführungsbeispiels erfolgt, mit vorzugsweise ebenfalls oszillierenden Wechselströmen gleicher Periode und trapezförmiger Halbwellenform.

Bei diesem Ausführungsbeispiel läßt sich der Effektivstrombedarf bezogen auf die effektive Polinduktion gegenüber der Sinusstrom gespeisten dreisträngigen Sternschaltung nach konventioneller Technik um den Faktor 3,65 reduzieren, das heißt die Leistungssteller sind bei gleicher Leistung wie bei der bekannten Drehstrommaschine lediglich für einen Maximalstrom auszulegen, der um den Faktor 3,65 kleiner ist.

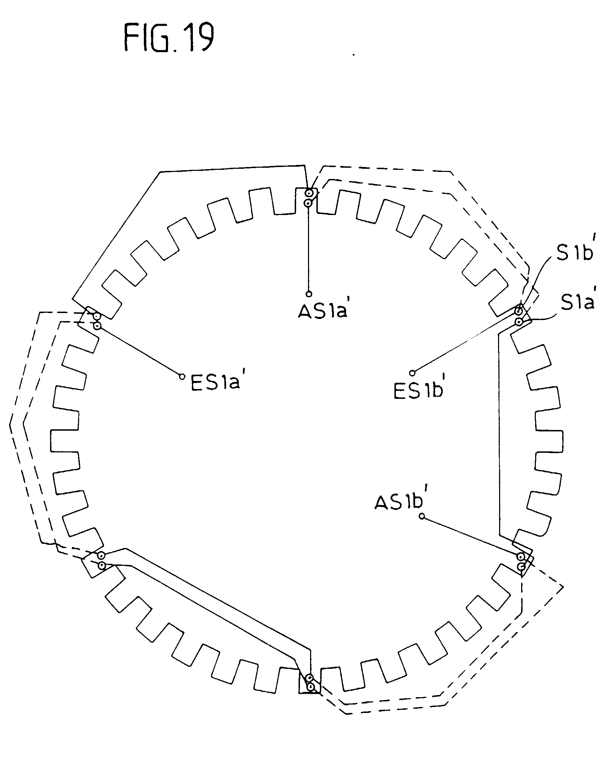

Bei einem dritten Ausführungsbeispiel werden bei einer Polygonschaltung gemäß dem zweiten Ausführungsbeispiel die Teilwicklungen Sla' bis S6b' so in den Stator 50 gewickelt, daß zwei einander gegenüberliegende Teilwicklungen Sla' und Slb', S2a' und S2b' in jeweils denselben Polnuten 58 liegen, wie in Fig. 19 dargestellt, jedoch um den gesamten Stator umlaufend in diesen gewickelt sind, wie in Fig. 19 exemplarisch für die Teilwicklungen Sla' und S1b' dargestellt. Dabei können der Anfang AS1a' und das Ende ESla' gegenüber dem Anfang AS1b' und dem Ende ESlb' ebenfalls um ganzzahlige Polteilungen versetzt liegen, um eine möglichst günstige Anordnung der Leistungsstellerblöcke SB zu erreichen.

Im übrigen sind das zweite und dritte Ausführungsbeispiel in gleicher Weise ausgebildet wie das erste Ausführungsbeispiel, so daß auf dieses vollinhaltlich Bezug genommen wird.

## Patentansprüche

1. Elektrische Asynchronmaschine umfassend
einen Rotor (10),
einen Stator (50),
eine dem Stator (50) oder dem Rotor (10) zugeordnete Wicklung (60) mit mindestens zwei Strängen (S), mit welcher ein umlaufendes Polfeld erzeugbar ist, wobei die Wicklung (60) mindestens eine geradzahlige Anzahl N von vier oder mehr Teilwicklungen (S) umfaßt, daß die Teilwicklungen (S) in Form einer Polygonschaltung so zusammengeschaltet sind, daß die Zahl der Ecken der Polygonschaltung der Zahl der Teilwicklungen (S) entspricht und jede Ecke einen Verknüpfungspunkt (V) von in der Polygonschaltung aufeinanderfolgenden Teilwicklungen (S) darstellt, so daß jeweils zwischen zwei aufeinanderfolgenden Verknüpfungspunkten (V) je eine Teilwicklung (S) liegt und wobei,
jeder Verknüpfungspunkt (V) einen Speiseanschluß (SP) aufweist, wobei die Speiseanschlüsse (SP) einander gegenüberliegender Verknüpfungspunkte (V) der Polygonschaltung ein Anschlußpaar (SP1, SP4; SP2, SP5; SP6, SP3) bilden, zwischen welchem jeweils zwei parallel geschaltete Sätze (S1, S3, S5; S6, S4, S2) mit jeweils derselben Zahl hintereinandergeschalteter Teilwicklungen (S) liegen,
und mindestens eine Strom- oder Spannungsquelle zur Speisung der Wicklung (60),
**dadurch gekennzeichnet,**
daß die Anschlußpaare der Polygonschaltung in getrennten gleichzeitig und phasenversetzt betriebenen Stromkreisen (SK) liegen und jeder dieser Stromkreise (SK) einen sich periodisch ändernden und sich auf die beiden Sätze (S1, S3, S5; S6, S4, S2) von Teilwicklungen (S) verteilenden Strom (I) durch die Wicklung (60) fließen läßt.

2. Asynchronmaschine nach Anspruch 1, dadurch gekennzeichnet, daß sich in jedem Stromkreis (SK) der Strom (I) im wesentlichen gleichmäßig auf die beiden Sätze von Teilwicklungen (S) der Wicklung (60) verteilt.

3. Asynchronmaschine nach Anspruch 1 oder 2, dadurch gekennzeichnet, daß in der Polygonschaltung einander gegenüberliegende Teilwicklungen (S1, S2; S3, S5; S4, S6) im wesentlichen gleich ausgebildet sind.

4. Asynchronmaschine nach Anspruch 3, dadurch gekennzeichnet, daß alle Teilwicklungen (S) der Wicklung (60) im wesentlichen gleich ausgebildet sind.

5. Asynchronmaschine nach einem der voranstehenden Ansprüche, dadurch gekennzeichnet, daß die Teilwicklungen (S) so in den Stator (50) bzw. den Rotor (10) gewickelt sind, daß in der Polygonschaltung einander gegenüberliegende Teilwicklungen (S) in nebeneinanderliegenden Polnuten (58) liegen.

6. Asynchronmaschine nach Anspruch 5, dadurch gekennzeichnet, daß die Teilwicklungen (S) so in den Stator (50) bzw. den Rotor (10) eingewickelt sind, daß in einer Umlaufrichtung der Polygonschaltung betrachtet die auf eine ausgewählte Teilwicklung (S1) folgende Teilwicklung (S2) in den Polnuten (58) neben den Polnuten (58) der der ausgewählten Teilwicklung (S1) gegenüberliegenden Teilwicklung (S2) liegt.

7. Asynchronmaschine nach einem der Ansprüche 1 bis 4, dadurch gekennzeichnet, daß die Teilwicklungen so in den Stator gewickelt sind, daß in der Polygonschaltung aufeinanderfolgende Teilwicklungen (S1a, S2a ...) in nebeneinanderliegenden Polnuten (58) liegen.

8. Asynchronmaschine nach Anspruch 7, dadurch gekennzeichnet, daß die Teilwicklungen (Sla, S1b etc) so in den Stator (50) bzw. den Rotor (10) gewickelt sind, daß in der Polygonschaltung einander gegenüberliegende Teilwicklungen (S1a, S1b etc) jeweils unterschiedliche Hälften (50a, b) des Stators durchsetzen und sich zusammen zu einer den Stator (50) vollständig durchsetzten Teilwicklung ergänzen.

9. Asynchronmaschine nach Anspruch 7, dadurch gekennzeichnet, daß die Teilwicklungen so in den Stator gewickelt sind, daß einander gegenüberliegende Teilwicklungen (S1a', S1b' etc) in gemeinsamen Polnuten (58) liegen.

10. Asynchronmaschine nach einem der voranstehenden Ansprüche, dadurch gekennzeichnet, daß Anfang (AS1, AS2 etc.) und Ende (ES1, ES2 etc.) in der Polygonschaltung aufeinanderfolgender Teilwicklungen (S1, S2 etc.) um ganzzahlige Zahlen von Polteilungen (62, 62') der Wicklung (60) gegeneinander versetzt angeordnet sind.

11. Asynchronmaschine nach Anspruch 10, dadurch gekennzeichnet, daß Anfang (AS1, AS2, etc.) und Ende (ES1, ES2, etc.) in der Polygonschaltung aufeinanderfolgender Teilwicklungen (S1, S2, etc.) um mindestens die ganzzahlige Zahl von Polteilungen (62, 62') der Wicklung (60) versetzt sind, die der nächst kleineren ganzen Zahl des Quotienten aus der Polzahl und der Zahl der Stränge (S) entspricht.

12. Asynchronmaschine nach Anspruch 10 oder 11, dadurch gekennzeichnet, daß Anfang (AS1, AS2, etc.) und Ende (ES1, ES2, etc.) in der Polschaltung aufeinanderfolgender Teilwicklungen (S1, S2, etc.) um höchstens die ganzzahlige Zahl von Polteilungen versetzt sind, die der nächst größeren ganzen Zahl des Quotienten aus Polzahl und Zahl der Stränge (S) entspricht.

13. Asynchronmaschine nach einem der voranstehenden Ansprüche, dadurch gekennzeichnet, daß jede Teilwicklung (S) der Wicklung (60) einen Strang bildet.

14. Asynchronmaschine nach einem der Ansprüche 1 bis 12, dadurch gekennzeichnet, daß zwei in der Polygonschaltung einander gegenüberliegende Teilwicklungen (S1a, S1b, S2a, S2b, etc.) einen Strang (S) bilden.

15. Asynchronmaschine nach Anspruch 13 oder 14, dadurch gekennzeichnet, daß jeder Strang (S) zu jedem Pol (P) des Polfeldes in gleicher Weise beiträgt.

16. Asynchronmaschine nach einem der voranstehenden Ansprüche, dadurch gekennzeichnet, daß die Ströme (I) in allen Stromkreisen (SK1, SK2, SK3) dieselbe Periodendauer aufweisen.

17. Asynchronmaschine nach einem der voranstehenden Ansprüche, dadurch gekennzeichnet, daß die Ströme (I) in allen Stromkreisen (SK1, SK2, SK3) dieselbe Halbwellenform aufweisen.

18. Asynchronmaschine nach einem der voranstehenden Ansprüche, dadurch gekennzeichnet, daß die Ströme (I) in allen Stromkreisen (SK1, SK2, SK3) im wesentlichen dieselbe Maximalamplitude aufweisen.

19. Asynchronmaschine nach einem der voranstehenden Ansprüche, dadurch gekennzeichnet, daß der sich periodisch ändernde Strom (I) in einem ausgewählten Stromkreis (SK1) gegenüber dem Strom in einem nächstliegenden Stromkreis (SK2, SK3) phasenverschoben ist.

20. Asynchronmaschine nach Anspruch 19, dadurch gekennzeichnet, daß der sich periodisch ändernde Strom (I) in einem ausgewählten Stromkreis (SK1) gegenüber dem Strom in einem nächstliegenden Stromkreis (SK2, SK3) um einen Phasenwinkel von 360° geteilt durch die Anzahl der Teilwicklungen (S) phasenverschoben ist.

21. Asynchronmaschine nach einem der voranstehenden Ansprüche, dadurch gekennzeichnet, daß die in allen Stromkreisen der Polygonschaltung fließenden Ströme (I) einen derartigen Zeitverlauf (I(T)) aufweisen, daß zu jedem Zeitpunkt (T) in mindestens einem der Stromkreise (SK1, SK2, SK3) die zeitliche Ableitung des Stroms (I(T)) ungleich Null ist.

22. Asynchronmaschine nach einem der voranstehenden Ansprüche, dadurch gekennzeichnet, daß die Halbwellenform der Ströme in den Stromkreisen so gewählt ist, daß der ansteigende und der abfallende Flankenbereich (AF, FF) jeder Halbwelle zusammen über einen Phasenwinkel von mindestens 360° geteilt durch die Anzahl der Teilwicklungen verlaufen.

23. Asynchronmaschine nach Anspruch 22, dadurch gekennzeichnet, daß der ansteigende Flankenbereich (AF) und der abfallende Flankenbereich (FF) der Halbwelle jeweils mindestens über einen Phasenwinkel von mindestens 360° geteilt durch die 2-fache Anzahl der Teilwicklungen (S) verlaufen.

24. Asynchronmaschine nach einem der voranstehenden Ansprüche, dadurch gekennzeichnet, daß die Halbwellenform einen ansteigenden Flankenbereich (AF), einen abfallenden Flankenbereich (FF) und einen dazwischen liegenden verbreiterten Maximalbereich (MB) aufweist.

25. Asynchronmaschine nach Anspruch 24, dadurch gekennzeichnet, daß die Halbwellenform trapezähnlich ist.

26. Asynchronmaschine nach Anspruch 24 oder 25, dadurch gekennzeichnet, daß sich der Maximalbereich (MB) maximal über einen Phasenwinkel von 360° geteilt durch die halbe Anzahl der Teilwicklungen (S) erstreckt.

27. Asynchronmaschine nach einem der voranstehenden Ansprüche, dadurch gekennzeichnet, daß in jedem Stromkreis (SK1, SK2, SK3) ein strom- oder spannungsfestlegender Leistungssteller (SB) vorgesehen ist.

28. Asynchronmaschine nach Anspruch 27, dadurch gekennzeichnet, daß durch den Leistungssteller (SB) in dem Stromkreis (SK1, SK2, SK3) ein eingeprägter Strom vorgebbar ist.

29. Asynchronmaschine nach Anspruch 27 oder 28, dadurch gekennzeichnet, daß in jedem Stromkreis (SK1; SK2; SK3) an jedem Speiseanschluß (SP1 ... SP6) ein Leistungssteller (SB1 ... SB6) vorgesehen ist und daß die beiden Leistungssteller (SB1, SB4; SB2, SB5; SB6, SB3) in jedem Stromkreis (SK1; SK2; SK3) durch eine gemeinsame Stellersteuerung (80) angesteuert sind.

30. Asynchronmaschine nach einem der Ansprüche 27 bis 29, dadurch gekennzeichnet, daß alle Leistungssteller (SB) aller Stromkreise (SK1, SK2, SK3) durch eine gemeinsame Stellersteuerung (80) angesteuert sind.

31. Asynchronmaschine nach einem der Ansprüche 27 bis 30, dadurch gekennzeichnet, daß alle Leistungssteller (SB) parallel geschaltet von einem Gleichstromkreis (108, 110) als Zwischenkreis gespeist sind.

## Claims

1. Electrical asynchronous machine comprising
a rotor (10),
a stator (50),
a winding (60) assigned to the stator (50) or to the rotor (10) with at least two phases (S), with which a rotating pole field can be generated, wherein the winding (60) comprises at least an even number N of four or more part windings (S), the part windings (S) being interconnected in the form of a polygon connection in such a way that the number of corners of the polygon connection corresponds to the number of the part windings (S) and each corner represents a point of coupling (V) of the part windings (S) succeeding each other in the polygon connection, so that between each two successive points of coupling (V) there is a part winding (S), and wherein each point of coupling (V) has a supply connection (SP), wherein the supply connections (SP) of opposite points of coupling (V) of the polygon connection form a pair of connections (SP1, SP4; SP2, SP5; SP6, SP3), between which there are two parallel connected sets (S1, S3, S5; S6, S4, S2) each with the same number of serially connected part windings (S), and at least one power or voltage source for supplying the winding (60),
characterised in that,
the connecting pairs of the polygon connection are in separate electric circuits (SK) operated simultaneously and out of phase and each of these electric circuits (SK) allows a periodically changing current (I), distributed over the two sets (S1, S3, S5; S6, S4, S2) of part windings (S), to flow through the winding (60).

2. Asynchronous machine according to claim 1, characterised in that in each electric circuit (SK) the current (I) is essentially evenly distributed over the two sets of part windings (S) of the winding (60).

3. Asynchronous machine according to claim 1 or 2, characterised in that the part windings (S1, S2; S3, S5; S4, S6) opposite each other in the polygon connection are essentially formed the same.

4. , Asynchronous machine according to claim 3, characterised in that all part windings (S) of the winding (60) are essentially formed the same.

5. Asynchronous machine according to any one of the preceding claims, characterised in that the part windings (S) are wound in the stator (50) and the rotor (10) in such a way that the part windings (S) opposite each other in the polygon connection lie in adjacent pole slots (58).

6. Asynchronous machine according to claim 5, characterised in that the part windings (S) are wound in the stator (50) and the rotor (10) in such a way that, viewed in one rotational direction of the polygon connection, the part winding (S2) following a selected part winding (S1) lies in the pole slots (58) next to the pole slots (58) of the part winding (S2) opposite the selected part winding (S1).

7. Asynchronous machine according to any one of claims 1 to 4, characterised in that the part windings are wound in the stator in such a way that the part windings succeeding each other in the polygon connection (S1a, S2a ...) lie in adjacent pole slots (58).

8. Asynchronous machine according to claim 7, characterised in that the part windings (S1a, S1b, etc.) are wound in the stator (50) and the rotor (10) in such a way that the part windings (S1a, S1b, etc.) opposite each other in the polygon connection each intersperse different halves (50a, b) of the stator and complement each other to form a part winding that has completely interspersed the stator (50).

9. Asynchronous machine according to claim 7, characterised in that the part windings are wound in the stator in such a way that the part windings (S1a', S1b', etc.) opposite each other lie in common pole slots (58).

10. Asynchronous machine according to any one of the preceding claims, characterised in that the start (AS1, AS2, etc.) and the end (ES1, ES2, etc.) of the part windings succeeding each other in the polygon connection (S1, S2, etc.) are offset relative to each other by integral numbers of pole pitches (62, 62').

11. Asynchronous machine according to claim 10, characterised in that the start (AS1, AS2, etc.) and the end (ES1, ES2, etc.) of the part windings succeeding each other in the polygon connection (S1, S2, etc.) are displaced by at least the integral number of pole pitches (62, 62') of the winding (60), which corresponds to the next smallest integer of the quotient resulting from pole number and number of phases (S).

12. Asynchronous machine according to claim 10 or 11, characterised in that the start (AS1, AS2, etc.) and the end (ES1, ES2, etc.) of the part windings succeeding each other in the polygon connection (S1, S2, etc.) are displaced by no more than the integral number of pole pitches, which corresponds to the next largest integer of the quotient resulting from pole number and number of phases (S).

13. Asynchronous machine according to any one of the preceding claims, characterised in that each part winding (S) of the winding (60) forms one phase (S).

14. Asynchronous machine according to any one of claims 1 to 12, characterised in that the part windings opposite each other in the polygon connection (S1a, S1b, S2a, S2b, etc.) form one phase (S).

15. Asynchronous machine according to claim 13 or 14, characterised in that each phase (S) contributes in the same way to each pole (P) of the pole field.

16. , Asynchronous machine according to any one of the preceding claims, characterised in that the currents (I) have the same period in all electric circuits (SK1, SK2, SK3).

17. Asynchronous machine according to any one of the preceding claims, characterised in that the currents (I) have the same half-wave form in all electric circuits (SK1, SK2, SK3).

18. Asynchronous machine according to any one of the preceding claims, characterised in that the currents (I) essentially have the same maximum amplitude in all electric circuits (SK1, SK2, SK3).

19. Asynchronous machine according to any one of the preceding claims, characterised in that the periodically changing current (I) is phase displaced in a selected electric circuit (SK1) relative to the current in an adjacent electric circuit (SK2, SK3).

20. Asynchronous machine according to claim 19, characterised in that the periodically changing current (I) is phase displaced in a selected electric circuit (SK1) relative to the current in an adjacent electric circuit (SK2, SK3) by one phase displacement angle of 360° divided by the number of the part windings (S).

21. Asynchronous machine according to any one of the preceding claims, characterised in that the currents (I) flowing in all electric circuits of the polygon connection have a time lapse (I(T)) of such a type that at any point in time (T) the temporal conductance of the current (I(T)) in at least one of the electric circuits (SK1, SK2, SK3) is not equal to zero.

22. Asynchronous machine according to any one of the preceding claims, characterised in that the half-wave form of the currents in the electric circuits is chosen in such a way that the rising and the falling flank zones (AF, FF) of each half-wave run through one phase angle of at least 360° divided by the number of the part windings.

23. Asynchronous machine according to claim 22, characterised in that the rising flank zone (AF) and the falling flank zone (FF) of the half-wave in each case run through at least one phase angle of at least 360° divided by double the number of the part windings (S).

24. Asynchronous machine according to any one of the preceding claims, characterised in that the half-wave form has a rising flank zone (AF) and a falling flank zone (FF), and a widened maximum zone (MB) lying between them.

25. Asynchronous machine according to claim 24, characterised in that the half-wave form is trapeziform.

26. Asynchronous machine according to claim 24 or 25, characterised in that the maximum zone (MB) is maximally extended over a phase displacement angle of 360° divided by half the number of part windings (S).

27. Asynchronous machine according to any one of the preceding claims, characterised in that a power or voltage-determining power controller unit (SB) is provided in each electric circuit (SK1, SK2, SK3).

28. Asynchronous machine according to claim 27, characterised in that an injected current can be pre-selected by the power controller unit (SB) in the electric circuit (SK1, SK2, SK3).

29. Asynchronous machine according to claim 27 or 28, characterised in that a power controller unit (SB1 ... SB6) is provided in each electric circuit (SK1; SK2; SK3) at each supply connection (SP1 ... SP6) and that the two power controller units (SB1, SB4; SB2, SB5; SB6, SB3) are controlled in each electric circuit (SK1; SK2; SK3) by a common unit control (80).

30. Asynchronous machine according to any one of claims 27 to 29, characterised in that all power controller units (SB) of all electric circuits (SK1, SK2, SK3) are controlled by a common control unit (80).

31. Asynchronous machine according to any one of claims 27 to 30, characterised in that all power controller units (SB) are supplied as an intermediate circuit connected in parallel by a direct current circuit (108, 110).

## Revendications

1. Machine électrique asynchrone comportant
- un rotor (10),
- un stator (50),
- un enroulement (60) associé au stator (50) ou au rotor (10), comprenant au moins deux branches (S) et grâce auquel un champ polaire tournant peut être généré, étant précisé que l'enroulement (60) comprend au moins un nombre pair N de quatre enroulements partiels (S), ou plus, et que les enroulements partiels (S) sont interconnectés sous la forme d'un montage polygonal de telle sorte que le nombre de coins du montage polygonal corresponde au nombre d'enroulements partiels (S) et que chaque coin représente un point de liaison (V) d'enroulements partiels (S) qui se suivent dans le montage polygonal, de sorte qu'à chaque fois, un enroulement partiel (S) se trouve entre deux points de liaison (V) successifs, et étant précisé que chaque point de liaison (V) présente un raccordement d'alimentation (SP), les raccordements d'alimentation (SP) de points de liaison (V) opposés du montage polygonal formant une paire (SP1, SP4 ; SP2, SP5 ; SP6, SP3) de raccordements entre lesquels se trouvent deux groupes montés en parallèle (S1, S3, S5 ; S6, S4, S2) avec le même nombre d'enroulements partiels (S) montés en série, et au moins une source de courant ou de tension pour alimenter l'enroulement (60),
caractérisée en ce que les paires de raccordements du montage polygonal se trouvent dans des circuits électriques (SK) séparés fonctionnant simultanément et de manière déphasée, et chacun de ces circuits (SK) laisse passer à travers l'enroulement (60) un courant (I) qui varie périodiquement et qui se répartit sur les deux groupes (S1, S3, S5 ; S6, S4, S2) d'enroulements partiels (S).

2. Machine asynchrone selon la revendication 1, caractérisée en ce que dans chaque circuit (SK), le courant (I) se répartit globalement uniformément sur les deux groupes d'enroulements partiels (S) de l'enroulement (60).

3. Machine asynchrone selon la revendication 1 ou 2, caractérisée en ce que les enroulements partiels (SI, S2 ; S3, S5 ; S4, S6) qui sont opposés dans le montage polygonal sont globalement identiques.

4. Machine asynchrone selon la revendication 3, caractérisée en ce que tous les enroulements partiels (S) de l'enroulement (60) sont globalement identiques.

5. Machine asynchrone selon l'une des revendications précédentes, caractérisée en ce que les enroulements partiels (S) sont enroulés dans le stator (50) ou dans le rotor (10) de telle sorte que les enroulements partiels (S) qui sont opposés dans le montage polygonal se trouvent dans des encoches polaires (58) voisines.

6. Machine asynchrone selon la revendication 5, caractérisée en ce que les enroulements partiels (S) sont placés dans le stator (50) ou dans le rotor (10) de telle sorte que si on considère le sens circulaire du montage polygonal, l'enroulement partiel (S2) qui suit un enroulement partiel choisi (S1) se trouve dans les encoches polaires (58) voisines des encoches polaires (58) de l'enroulement partiel (S2) opposé audit enroulement partiel choisi (S1).

7. Machine asynchrone selon l'une des revendications 1 à 4, caractérisée en ce que les enroulements sont enroulés dans le stator de telle sorte que les enroulements partiels (S1a, S2a ...) qui se suivent dans le montage polygonal se trouvent dans des encoches polaires (58) voisines.

8. Machine asynchrone selon la revendication 7, caractérisée en ce que les enroulements partiels (S1a, S1b, etc.) sont enroulés dans le stator (50) ou dans le rotor (10) de telle sorte que les enroulements partiels (S1a, S1b, etc.) qui sont opposés dans le montage polygonal traversent des moitiés différentes (50a, b) du stator et se complètent pour former un enroulement partiel qui traverse entièrement le stator (50).

9. Machine asynchrone selon la revendication 7, caractérisée en ce que les enroulements partiels sont enroulés dans le stator de telle sorte que les enroulements partiels (S1a', S1b', etc.) opposés se trouvent dans des encoches polaires (58) communes.

10. Machine asynchrone selon l'une des revendications précédentes, caractérisée en ce que le début (AS1, AS2, etc.) et la fin (ES1, ES2, etc.) d'enroulements partiels (S1, S2, etc.) qui se suivent dans le montage polygonal sont décalés suivant des nombres entiers de pas polaires (62, 62') de l'enroulement (60).

11. Machine asynchrone selon la revendication 10, caractérisée en ce que le début (AS1, AS2, etc.) et la fin (ES1, ES2, etc.) d'enroulements partiels (S1, S2, etc.) qui se suivent dans le montage polygonal sont décalés au minimum suivant le nombre entier de pas polaires (62, 62') de l'enroulement (60) qui correspond au nombre entier directement inférieur du quotient du nombre de pôles et du nombre de branches (S).

12. Machine asynchrone selon la revendication 10 ou 11, caractérisée en ce que le début (AS1, AS2, etc.) et la fin (ES1, ES2, etc.) d'enroulements partiels (S1, S2, etc.) qui se suivent dans le montage polygonal sont décalés au maximum suivant le nombre entier de pas polaires qui correspond au nombre entier directement supérieur du quotient du nombre de pôles et du nombre de branches (S).

13. Machine asynchrone selon l'une des revendications précédentes, caractérisée en ce que chaque enroulement partiel (S) de l'enroulement (60) forme une branche.

14. Machine asynchrone selon l'une des revendications 1 à 12, caractérisée en ce que deux enroulements partiels (S1a, S1b, S2a, S2b, etc.) qui sont opposés dans le montage polygonal forment une branche (S).

15. Machine asynchrone selon la revendication 13 ou 14, caractérisée en ce que chaque branche (S) contribue de la même manière à chaque pôle (P) du champ polaire.

16. Machine asynchrone selon l'une des revendications précédentes, caractérisée en ce que les courants (I) présentent la même période dans tous les circuits (SK1, SK2, SK3).

17. Machine asynchrone selon l'une des revendications précédentes, caractérisée en ce que les courants (I) présentent la même forme de demi-onde dans tous les circuits (SK1, SK2, SK3).

18. Machine asynchrone selon l'une des revendications précédentes, caractérisée en ce que les courants (I) présentent globalement la même amplitude maximale dans tous les circuits (SK1, SK2, SK3).

19. Machine asynchrone selon l'une des revendications précédentes, caractérisée en ce que le courant (I) qui varie périodiquement est déphasé dans un circuit choisi (SK1) par rapport au courant d'un circuit directement voisin (SK2, SK3).

20. Machine asynchrone selon la revendication 19, caractérisée en ce que le courant (I) qui varie périodiquement est déphasé dans un circuit choisi (SK1) par rapport au courant d'un circuit directement voisin (SK2, SK3), suivant un angle de phase de 360° divisé par le nombre d'enroulements partiels (S).

21. Machine asynchrone selon l'une des revendications précédentes, caractérisée en ce que les courants (I) qui circulent dans tous les circuits du montage polygonal présentent une courbe dans le temps (I(T)) qui est telle qu'à chaque moment (T), la dérivation dans le temps du courant (I(T)) est différente de zéro dans l'un au moins des circuits (SK1, SK2, SK3).

22. Machine asynchrone selon l'une des revendications précédentes, caractérisée en ce que la forme de demi-onde des courants dans les circuits est choisie de telle sorte que les zones de flanc ascendante et descendante (AF, FF) de chaque demi-onde s'étendent ensemble suivant un angle de phase d'au moins 360° divisé par le nombre d'enroulements partiels.

23. Machine asynchrone selon la revendication 22, caractérisée en ce que la zone de flanc ascendante (AF) et la zone de flanc descendante (FF) de la demi-onde s'étendent chacune suivant au moins un angle de phase d'au moins 360° divisé par le double du nombre d'enroulements (S) .

24. Machine asynchrone selon l'une des revendications précédentes, caractérisée en ce que la forme de demi-onde présente une zone de flanc ascendante (AF), une zone de flanc descendante (FF) et une zone maximale élargie (MB) située entre les deux.

25. Machine asynchrone selon la revendication 24, caractérisée en ce que la forme de demi-onde est semblable à un trapèze.

26. Machine asynchrone selon la revendication 24 ou 25, caractérisée en ce que la zone maximale (MB) s'étend au maximum suivant un angle de phase de 360° divisé par la moitié du nombre d'enroulements partiels (S).

27. Machine asynchrone selon l'une des revendications précédentes, caractérisée en ce qu'il est prévu dans chaque circuit (SK1, SK2, SK3) un élément de réglage de puissance (SB) qui détermine le courant ou la tension.

28. Machine asynchrone selon la revendication 27, caractérisée en ce que grâce à l'élément de réglage de puissance (SB), un courant appliqué peut être prédéfini dans le circuit (SK1, SK2, SK3).

29. Machine asynchrone selon la revendication 27 ou 28, caractérisée en ce qu'un élément de réglage de puissance (SB1...SB6) est prévu dans chaque circuit (SK1 ; SK2 ; SK3) au niveau de chaque raccordement d'alimentation (SP1...SP6), et en ce que les deux éléments de réglage de puissance (SB1, SB4 ; SB2, SB5 ; SB6, SB3) prévus dans chaque circuit (SK1 ; SK2 ; SK3) sont commandés par une commande d'élément de réglage commune (80).

30. Machine asynchrone selon l'une des revendications 27 à 29, caractérisée en ce que tous les éléments de réglage de puissance (SB) de tous les circuits (SK1, SK2, SK3) sont commandés par une commande d'élément de réglage commune (80).

31. Machine asynchrone selon l'une des revendications 27 à 30, caractérisée en ce que tous les éléments de réglage de puissance (SB), montés en parallèle, sont alimentés par un circuit à courant continu (108, 110) conçu comme un circuit intermédiaire.
